# EUROPEAN PATENT APPLICATION

(11) **EP 4 806 593 A1**
(43) Date of publication of application: **16.09.2026**
(21) Application number: 25738800.9
(22) Date of filing: 09.01.2025
(51) Int. Cl.: B25J 5/00, B25J 13/00, B64U 20/87, G05D 1/43, G05D 1/46, G05D 1/686, G05D 1/692, G08B 15/00, G08B 25/04, B64U 101/31

(54) **ROBOT**

(30) Priority: 12.01.2024 JP 2024003437; 19.01.2024 JP 2024006966; 25.03.2024 JP 2024048135; 28.03.2024 JP 2024053866; 28.03.2024 JP 2024054321
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2025/000479
(87) International publication number: WO 2025/150532

(57) **Abstract**

A robot according to an embodiment includes a robot body capable of autonomous traveling, a detection unit that detects a situation around the robot body, and a control unit that causes the robot body to travel autonomously according to the situation detected by the detection unit. The robot body includes a torso, two legs movably attached to the torso, and rollers that are provided one on each of the two legs and move the robot body. A central portion of each roller is provided at a position substantially intermediate between a knee portion and the ground in each of the two legs.

## Description

### Technical Field

Embodiments of the disclosure relate to a robot.

### Background Art

Conventionally, a system is known in which, when harm is inflicted on a vehicle, a drone is caused to take off from the vehicle, and the vehicle and the surroundings of the vehicle are imaged by a camera provided on the drone (for example, see Patent Document 1).

### Citation List

### Patent Literature

[Patent Document 1] Japanese Unexamined Patent Application Publication No. 2020-093618

### Summary of Invention

### Technical Problem

In the conventional technology, there is a problem that, for example, when a suspicious target is detected and the suspicious target runs away, the suspicious target cannot be tracked.

The present invention has been made in view of the above, and has an object of tracking a suspicious target.

### Solution to Problem

A robot according to one aspect of an embodiment includes a robot body capable of autonomous traveling, a detection unit that detects a situation around the robot body, and a control unit that causes the robot body to travel autonomously according to the situation detected by the detection unit. The robot body includes a torso, two legs movably attached to the torso, and rollers that are provided one on each of the two legs and move the robot body. A central portion of each roller is provided at a position substantially intermediate between a knee portion and the ground in each of the two legs.

### Effects of Invention

According to one aspect of an embodiment, a suspicious target can be tracked.

### Brief Description of the Drawings

FIG. 1 is a diagram showing an outline of a tracking system according to a first embodiment.
FIG. 2 is a diagram showing an outline of a tracking robot according to the first embodiment.
FIG. 3 is a functional block diagram showing an outline of a control device of the tracking robot according to the first embodiment.
FIG. 4 is a functional block diagram showing an outline of a management device according to the first embodiment.
FIG. 5 is a flowchart for explaining a travel control process according to the first embodiment.
FIG. 6 is a diagram schematically showing one example of a computer hardware configuration functioning as the tracking robot or the management device.
FIG. 7 is a diagram showing an outline of a tracking robot according to a second embodiment.
FIG. 8 is a diagram showing an outline of a tracking robot according to the second embodiment.
FIG. 9 is a diagram showing an outline of a tracking robot according to the second embodiment.
FIG. 10 is a diagram showing an outline of a tracking robot according to a third embodiment.
FIG. 11 is a functional block diagram showing an outline of a control device of the tracking robot according to the third embodiment.
FIG. 12 is a flowchart for explaining a suspicious target detection process executed by the tracking robot according to the third embodiment.
FIG. 13 is a flowchart for explaining a control process of a short-range drone according to the third embodiment.
FIG. 14 is a flowchart for explaining a control process of a long-range drone according to the third embodiment.
FIG. 15A is a diagram showing a flight example of the long-range drone before a tracking mark is fired.
FIG. 15B is a diagram showing a flight example of the long-range drone after the tracking mark has adhered to a suspicious target.
FIG. 16 is a diagram showing an outline of a tracking robot according to a fourth embodiment.
FIG. 17 is a functional block diagram showing an outline of a control device of the tracking robot according to the fourth embodiment.
FIG. 18 is a flowchart for explaining a control process of a response unit executed by the tracking robot according to the fourth embodiment.
FIG. 19 is a diagram showing an outline of a tracking system according to a fifth embodiment.
FIG. 20 is a diagram showing an outline of a tracking robot according to the fifth embodiment.
FIG. 21 is a flowchart for explaining a travel control process according to the fifth embodiment.

### Detailed Description of Embodiments

### (First Embodiment)

Hereinafter, the present invention will be described through embodiments, but the following embodiments do not limit the invention according to the claims. In addition, not all combinations of features described in the embodiments are necessarily essential to the means for solving the invention.

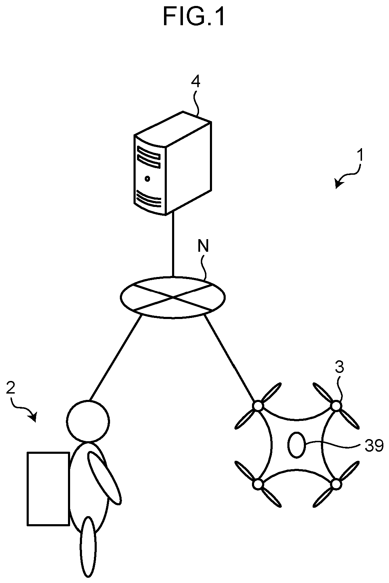

A tracking system 1 including a tracking robot 2 according to the first embodiment will be described with reference to FIG. 1. FIG. 1 is a diagram showing an outline of the tracking system 1 according to the first embodiment.

The tracking system 1 includes a tracking robot 2, a long-range drone 3, and a management device 4. The tracking robot 2 and the long-range drone 3, and the management device 4, are connected via a network N. A plurality of the tracking robots 2 and the long-range drones 3 are provided, for example.

The network N is, for example, a mobile communication network such as LTE (Long Term Evolution) or 5G. The tracking robot 2 and the long-range drone 3 may be connected via the network N. [Translator's Note: The source text is unclear as to what the tracking robot 2 and the long-range drone 3 are connected to.]

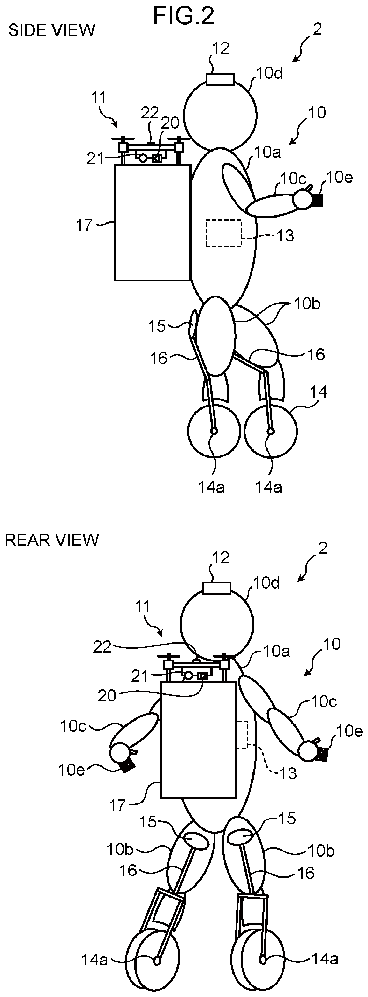

Next, the tracking robot 2 will be described with reference to FIG. 2. FIG. 2 is a diagram showing an outline of the tracking robot 2 according to the first embodiment.

The tracking robot 2 includes a robot body 10, a short-range drone 11, a detection unit 12, and a control device 13. The tracking robot 2 is capable of autonomous traveling, and tracks a suspicious target when the suspicious target is detected. The suspicious target includes, for example, a person behaving suspiciously, a criminal in an incident, and the like. The suspicious target is not limited to a person, and may be a vehicle ridden by a person who behaved suspiciously.

The robot body 10 is a humanoid robot. For example, the robot body 10 is substantially life-size with a general adult male human. The robot body 10 includes a torso 10a, two legs 10b, arms 10c, and a head 10d. The legs 10b, the arms 10c, and the head 10d are movably attached to the torso 10a.

The robot body 10 is provided with drive mechanisms such as motors for moving each part such as the legs 10b, the arms 10c, and the head 10d. The robot body 10 can travel by the legs 10b being moved.

The robot body 10 also includes rollers 14. The rollers 14 are provided on the respective two legs 10b. Specifically, a central portion 14a of each roller 14 is provided at a position substantially intermediate between a knee portion and the ground in each of the two legs 10b. One roller 14 is provided for each of the two legs 10b.

Each roller 14 can rotate relative to the leg 10b. For example, the roller 14 rotates by transmission of rotation generated by a motor. The robot body 10 can travel by the rollers 14 rotating.

For example, one wheel that is a roller 14 having a diameter of 20 cm or more and 60 cm or less is equipped on each of the two legs 10b of the robot body 10 having a height of 160 cm or more and 180 cm or less, the robot body 10 being substantially life-size with a general adult male human.

Further, an axle, which is a central portion of the wheel, is provided not at a position substantially on the ground corresponding to a heel at a human ankle, but at a position substantially intermediate between a knee portion in each of the two legs 10b (about 40 cm from the ground) and the ground substantially corresponding to a human ankle (about 20 cm from the ground). In this case, the robot body 10 has an ability to run on a roadway at a speed of 40 km/h or more and 100 km/h or less.

The robot body 10 is also provided with a drive mechanism for driving each of the rollers 14. For example, a main motor 15 of the drive mechanism is provided at a buttock portion in each of the two legs 10b. The main motor 15 is connected to the rollers 14 by a shaft 16. The drive mechanism for driving each of the rollers 14 may be provided at a calf portion in each of the two legs 10b, or may be an in-wheel motor.

The rollers 14 may have a speed reduction mechanism such as a gear. The legs 10b are provided with a locking mechanism capable of locking so that the rollers 14 do not rotate. For example, the locking mechanism locks a rotation shaft of the rollers 14.

For example, the locking mechanism locks the rollers 14 so that the rollers 14 do not rotate relative to the legs 10b by a claw portion engaging with a gear provided on the rotation shaft of the rollers 14. By release of the engagement between the gear and the claw portion, the rollers 14 can rotate relative to the legs 10b. The above-described locking mechanism is one example, and is not limited thereto.

The robot body 10 can travel by first traveling mode or second traveling mode. The first traveling mode is a method of traveling by the legs 10b being moved. The second traveling mode is a method of traveling by the rollers 14 rotating.

In the first traveling mode, the rollers 14 are locked by the locking mechanism so as not to rotate relative to the legs 10b. In the second traveling mode, the lock by the locking mechanism is released for the rollers 14.

A traveling speed in the second traveling mode is faster than a traveling speed in the first traveling mode. That is, a moving speed of the robot body 10 by the rollers 14 is faster than a traveling speed of the robot body 10 by movement of the legs 10b.

Fingers 10e are provided at distal ends of the arms 10c. For example, five fingers 10e are provided at the distal end of each arm 10c. Each finger 10e is bendable by a drive mechanism such as a motor.

A base portion 17 on which the short-range drone 11 can take off and land is provided on a back surface of the torso 10a. The base portion 17 includes a charging device that charges a battery of the short-range drone 11. The base portion 17 may also include a replacement battery for the short-range drone 11.

The short-range drone 11 is one example of a moving body. The short-range drone 11 is a multicopter including a plurality of (for example, four) rotary-wing propellers, and performs unmanned autonomous flight. The short-range drone 11 is driven by a battery.

The short-range drone 11 includes a camera 20 and a tracking mark 21. The tracking mark 21 is fired from the short-range drone 11. The short-range drone 11 includes a launcher that fires the tracking mark 21.

For example, when the tracking mark 21 is fired at a suspicious target, it adheres to the suspicious target. For example, the tracking mark 21 is provided with a magnet. For example, when the suspicious target is a vehicle, the tracking mark 21 adheres to the suspicious target by magnetic force. The tracking mark 21 may have adhesiveness.

For example, the tracking mark 21 has a positioning device. The positioning device is, for example, GNSS (Global Navigation Satellite System), and can perform positioning and timekeeping by receiving radio waves from navigation satellites orbiting overhead. The positioning device also includes a communication module that transmits detected positional information of itself. Positional information of the tracking mark 21 detected by the positioning device is transmitted to the management device 4 via the network N. Positional information of the tracking mark 21 detected by the positioning device is transmitted to the control device 13 via the network N. When the tracking mark 21 adheres to a suspicious target, the position of the suspicious target is detected based on the positional information transmitted from the positioning device.

The tracking mark 21 may also be, for example, a ball or the like containing fluorescent paint. The ball containing fluorescent paint bursts by hitting the suspicious target, and causes the fluorescent paint to adhere to the suspicious target. The short-range drone 11 may include a plurality of types of tracking marks 21.

The short-range drone 11 includes a communication module for performing wireless communication via the network N. The short-range drone 11 also includes various sensors such as an acceleration sensor, a gyro sensor, and an optical sensor.

The short-range drone 11 also has a positioning device 22 for measuring its own position. The positioning device 22 is, for example, GNSS. Positional information of the short-range drone 11 detected by the positioning device 22 may be transmitted to the management device 4 via the network N. Positional information of the short-range drone 11 detected by the positioning device 22 may be transmitted to the control device 13 via the network N. The short-range drone 11 also has a computer (for example, a microcomputer) that executes a flight control function, an attitude control function for controlling attitude, and the like.

The short-range drone 11 acquires, via the communication module, information relating to a first flight route from the control device 13. The information relating to the first flight route includes positional information (for example, latitude, longitude, and altitude) of the first flight route. The first flight route is a flight route for tracking a suspicious target.

The short-range drone 11 transmits, via the communication module, an image captured by the camera 20 to the management device 4. The short-range drone 11 transmits, via the communication module, an image captured by the camera 20 to the control device 13. The short-range drone 11 acquires, via the communication module, information relating to a firing signal of the tracking mark 21 from the control device 13.

When a suspicious target is detected, the short-range drone 11 takes off from the base portion 17 of the robot body 10. The short-range drone 11 acquires information relating to the first flight route, and flies along the first flight route so as to track the suspicious target. The short-range drone 11 executes image processing based on the image captured by the camera 20, and flies along the first flight route while avoiding an obstacle. When a firing signal of the tracking mark 21 is acquired, the short-range drone 11 fires the tracking mark 21. The short-range drone 11 fires the tracking mark 21 toward the suspicious target.

The detection unit 12 is provided, for example, on the head 10d of the robot body 10. The detection unit 12 may be provided on the torso 10a, the fingers 10e, or the like of the robot body 10. The detection unit 12 detects a situation around the robot body 10. The detection unit 12 includes, for example, a high-sensitivity camera capable of 360-degree sensing, LiDAR (light detection and ranging), a thermal camera, a radar, a microphone, and the like. The detection unit 12 may include sensors for vision recognition, fine sound, ultrasonic waves, vibration, infrared rays, ultraviolet rays, electromagnetic waves, and the like. A plurality of detection units 12 may be provided. The detection unit 12 may be a plurality of types of sensors or the like. The detection unit 12 may include a gyroscope. The gyroscope is provided, for example, at a shoulder portion or a waist portion in the torso 10a of the robot body 10, at a knee portion in the legs 10b, at a position corresponding to a human ankle, or the like.

The detection unit 12 also includes a positioning device. The positioning device is, for example, GNSS. The positioning device detects the position of the robot body 10. Detected positional information of the robot body 10 is transmitted to the management device 4 via the network N.

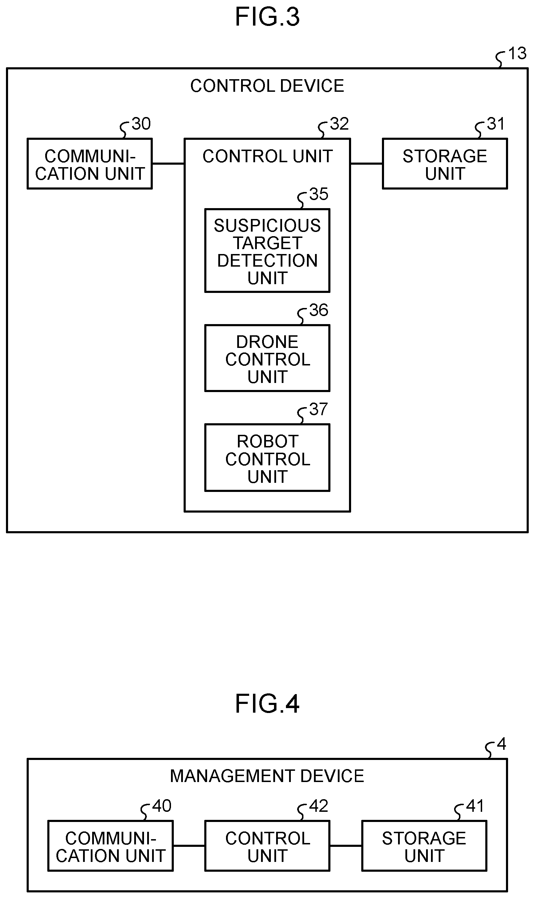

As shown in FIG. 3, the control device 13 includes a communication unit 30, a storage unit 31, and a control unit 32. FIG. 3 is a functional block diagram showing an outline of the control device 13 of the tracking robot 2 according to the first embodiment.

The communication unit 30 is wirelessly connected to the network N. The communication unit 30 transmits and receives information to and from the management device 4 via the network N. The communication unit 30 transmits various types of information detected by the detection unit 12 to the management device 4. The communication unit 30 receives an image captured by the camera 20 of the short-range drone 11. The communication unit 30 receives positional information of the tracking mark 21 from the positioning device of the tracking mark 21.

The storage unit 31 is realized by, for example, a semiconductor memory element such as RAM (Random Access Memory) or flash memory (Flash Memory), or a storage device such as an HDD (Hard Disk Drive), an SSD (Solid State Drive), or an optical disk. Various programs, various data, and the like are stored in the storage unit 31.

The control unit 32 is a controller, and includes, for example, a microcomputer having a CPU (Central Processing Unit), a ROM (Read Only Memory), a RAM, input/output ports, and the like, and various circuits. The control unit 32 may also be configured by hardware such as an integrated circuit such as an ASIC (Application Specific Integrated Circuit) or an FPGA (Field Programmable Gate Array). The control unit 32 includes a suspicious target detection unit 35, a drone control unit 36, and a robot control unit 37.

The suspicious target detection unit 35 detects a suspicious target. The suspicious target detection unit 35 detects a suspicious target based on various types of information detected by the detection unit 12. For example, the suspicious target detection unit 35 executes predetermined image processing on an image captured by a high-sensitivity camera provided on the tracking robot 2, and detects a suspicious target. For example, the suspicious target detection unit 35 may detect a suspicious target according to a detection result by an infrared sensor. The suspicious target detection unit 35 may detect a suspicious target using a suspicious target detection model in AI (Artificial Intelligence).

The drone control unit 36 controls the short-range drone 11 and the long-range drone 3. The drone control unit 36 sets a first flight route of the short-range drone 11. The drone control unit 36 sets a first flight route for tracking the detected suspicious target. The drone control unit 36 sets the first flight route based on current positional information of the tracking robot 2 and positional information at which the suspicious target has been detected. For example, the drone control unit 36 sets the first flight route based on current positional information of the tracking robot 2, a direction in which the suspicious target has been detected with respect to the tracking robot 2, and a distance from the tracking robot 2 to the suspicious target.

The drone control unit 36 sets a second flight route of the long-range drone 3. The drone control unit 36 sets a second flight route for tracking the detected suspicious target. The drone control unit 36 sets the second flight route based on positional information of a station at which the long-range drone 3 is waiting and positional information of the tracking mark 21. The drone control unit 36 may set the second flight route based on positional information of the long-range drone 3 and positional information of the tracking mark 21.

The drone control unit 36 may set the first flight route and the second flight route based on a predicted escape route of the suspicious target. The predicted escape route is generated by, for example, an escape route prediction model. The escape route prediction model predicts an escape route of the suspicious target from positional information of the tracking robot 2 when the suspicious target is detected, positional information of the tracking mark 21, map information, traffic information, and the like. Positional information of the tracking mark 21, for example, history information of the position of the tracking mark 21, is included.

For example, the escape route prediction model is a text generation model (a so-called AI chat engine), and may be interpreted as an algorithm and computation for automatic dialogue processing by characters. Since the text generation model is publicly known as disclosed in, for example, Japanese Unexamined Patent Application Publication No. 2018-081444 and chatGPT (Internet search <URL:https://openai.com/blog/chatgpt>), a detailed description thereof is omitted. Such a text generation model is configured by a large language model (LLM: Large Language Model).

For example, based on positional information of the tracking mark 21, the drone control unit 36 generates, by a language generation model, a sentence such as "The suspicious target is escaping from east to west at the intersection of DD in ABC town. What kind of escape route can be considered?" Then, by inputting the generated sentence to the escape route prediction model, a sentence such as, for example, "The suspicious person is highly likely to head toward EF in ABC town." is generated. In this case, the drone control unit 36 sets the first flight route and the second flight route heading toward "EF in ABC town."

By setting the first flight route and the second flight route based on the predicted escape route of the suspicious target, the short-range drone 11 and the long-range drone 3 can move ahead to the destination of movement of the suspicious target. The predicted escape route may be set by the management device 4.

The set first flight route is transmitted to the short-range drone 11. The short-range drone 11 having received the first flight route takes off from the base portion 17, flies along the first flight route, and tracks the suspicious target.

The set second flight route is transmitted to the long-range drone 3. The long-range drone 3 having received the second flight route takes off from the station at which it is waiting, flies along the second flight route, and tracks the suspicious target.

The drone control unit 36 generates a firing signal of the tracking mark 21 of the short-range drone 11. For example, the drone control unit 36 calculates a distance to the suspicious target from an image captured by the camera 20 of the short-range drone 11. Then, when the distance to the suspicious target is equal to or less than a predetermined distance set in advance, the drone control unit 36 generates a firing signal for firing the tracking mark 21 toward the suspicious target. The generated firing signal is transmitted to the short-range drone 11. Thereby, the tracking mark 21 is fired toward the suspicious target.

The robot control unit 37 sets a travel route of the robot body 10. The travel route includes a patrol route set in advance. The robot control unit 37 causes the robot body 10 to travel autonomously along the travel route. The robot control unit 37 causes the robot body 10 to travel autonomously according to the situation detected by the detection unit 12. The robot control unit 37 causes the robot body 10 to travel autonomously by controlling driving of the legs 10b, the rollers 14, and the arms 10c of the robot body 10. The robot control unit 37 controls driving of the legs 10b, the rollers 14, and the arms 10c of the robot body 10 based on various types of information detected by the detection unit 12 so that, for example, the robot body 10 travels while avoiding an obstacle.

For example, the robot control unit 37 causes the robot body 10 to travel autonomously using a result obtained by inputting the situation detected by the detection unit 12 to a trained model that outputs motion information relating to movement of each of the two legs 10b according to input of the situation around the robot body 10.

The trained model is, for example, generative AI such as a text generation model such as chatGPT that performs automatic dialogue processing by characters. The motion information includes, for example, at least one of thigh lifting and knee bending of each of the two legs 10b, and rotational speeds of the respective rollers 14 provided one on each of the two legs 10b.

Further, for example, when a suspicious target is detected, the robot control unit 37 sets a travel route so as to track the suspicious target. For example, the robot control unit 37 sets a travel route so as to track the suspicious target based on positional information of the robot body 10 and positional information at which the suspicious target has been detected. For example, the robot control unit 37 sets a travel route for tracking the suspicious target based on current positional information of the robot body 10, a direction in which the suspicious target has been detected with respect to the robot body 10, and a distance from the robot body 10 to the suspicious target.

Further, after the short-range drone 11 has taken off, the robot control unit 37 sets a travel route so as to track the suspicious target based on positional information of the robot body 10 and positional information of the tracking mark 21.

When a suspicious target is detected, the robot control unit 37 may set a travel route so as to track the suspicious target based on the above-described predicted escape route of the suspicious target. By setting the travel route of the robot body 10 based on the predicted escape route of the suspicious target, the robot body 10 can move ahead to the destination of movement of the suspicious target.

The robot control unit 37 switches a traveling mode of the robot body 10. The robot control unit 37 switches the traveling mode of the robot body 10 to the first traveling mode by movement of the legs 10b or the second traveling mode by rotation of the rollers 14.

For example, when a suspicious target is not detected, the robot control unit 37 sets the traveling mode of the robot body 10 to the first traveling mode. When causing the robot body 10 to travel in the first traveling mode, the robot control unit 37 locks the rollers 14 by the locking mechanism so that the rollers 14 do not rotate.

When it is necessary to cause the robot body 10 to travel at a speed faster than the first traveling mode, the robot control unit 37 sets the traveling mode of the robot body 10 to the second traveling mode. For example, when a suspicious target is detected and the suspicious target is tracked, the robot control unit 37 sets the traveling mode of the robot body 10 to the second traveling mode.

When causing the robot body 10 to travel in the second traveling mode, the robot control unit 37 stops movement of the legs 10b. For example, the robot control unit 37 sets the legs 10b to a predetermined position. The predetermined position is a position set in advance, and is a position at which the robot body 10 has a posture suitable for traveling in the second traveling mode by rotation of the rollers 14. For example, the predetermined position is a position at which a center of gravity of the robot body 10 is at a height at which it is equal to or less than half of the overall length of the tracking robot 2. For example, the predetermined position is a position at which the robot body 10 is in a posture as if crouching. The robot control unit 37 also releases the lock by the locking mechanism and rotates the rollers 14.

The robot control unit 37 sets the traveling mode of the robot body 10 to the first traveling mode even when tracking of the suspicious target has started, for example, when the robot body 10 goes up and down stairs, gets over a step, or the like.

Here, one example has been described in which the traveling mode of the robot body 10 is switched to the first traveling mode or the second traveling mode depending on whether a suspicious target is detected, but the present invention is not limited thereto. For example, the robot body 10 may travel mainly in the second traveling mode, and may travel in the first traveling mode when the robot body 10 goes up and down stairs, gets over a step, or the like. A condition for switching the traveling mode of the robot may be settable.

Returning to FIG. 1, the long-range drone 3 is one example of a moving body. The long-range drone 3 is, for example, a multicopter including a plurality of rotary-wing propellers and performing unmanned autonomous flight, similarly to the short-range drone 11. The short-range drone 11 is driven by a battery.

The long-range drone 3 has a longer flight distance than the short-range drone 11. The flight distance is a distance that can be flown on one charge. The long-range drone 3 waits at a station set in advance. For example, the long-range drone 3 includes a large battery in order to make the flight distance longer than that of the short-range drone 11. For example, the long-range drone 3 is larger than the short-range drone 11. The long-range drone 3 may be, for example, an airplane type.

The long-range drone 3 includes a camera similarly to the short-range drone 11. For example, unlike the short-range drone 11, the long-range drone 3 does not include a tracking mark. The long-range drone 3 may include a tracking mark similarly to the short-range drone 11.

The long-range drone 3 includes a communication module for performing wireless communication via the network N. The long-range drone 3 also includes various sensors such as an acceleration sensor, a gyro sensor, and an optical sensor.

The long-range drone 3 also has a positioning device 39 (see FIG. 1) for measuring its own position. The positioning device 39 is, for example, GNSS. Positional information of the long-range drone 3 detected by the positioning device 39 may be transmitted to the management device 4 via the network N. Positional information of the long-range drone 3 detected by the positioning device 39 may be transmitted to the control device 13 via the network N. The long-range drone 3 also has a computer (for example, a microcomputer) that executes a flight control function, an attitude control function for controlling attitude, and the like.

The long-range drone 3 acquires, via the communication module, information relating to a second flight route from the control device 13. The information relating to the second flight route includes positional information (for example, latitude, longitude, and altitude) of the second flight route.

The long-range drone 3 may fly so as to take over tracking of the suspicious target by the short-range drone 11. The long-range drone 3 may track the suspicious target simultaneously with the short-range drone 11.

The long-range drone 3 transmits, via the communication module, an image captured by the camera to the management device 4. The long-range drone 3 transmits, via the communication module, an image captured by the camera to the control device 13.

When a suspicious target is detected, the long-range drone 3 takes off from the station at which it is waiting. The long-range drone 3 acquires information relating to the second flight route, and flies along the second flight route so as to track the suspicious target. The long-range drone 3 executes image processing based on the image captured by the camera, and flies along the second flight route while avoiding an obstacle.

By tracking the suspicious target using the short-range drone 11 and the long-range drone 3, trackability with respect to the suspicious target can be improved. For example, indoors, tracking may be performed by the short-range drone 11, which is smaller than the long-range drone 3, and when the suspicious target escapes outdoors, tracking may be performed by the long-range drone 3.

The management device 4 is, for example, a server device. The management device 4 may be a cloud server. As shown in FIG. 4, the management device 4 includes a communication unit 40, a storage unit 41, and a control unit 42. FIG. 4 is a functional block diagram showing an outline of the management device 4 according to the first embodiment.

The management device 4 collects various types of information and the like detected by the detection unit 12 of the tracking robot 2 from the tracking robot 2 that has detected the suspicious target. The management device 4 also collects various types of information and the like detected by the detection unit 12 from a tracking robot 2 different from the tracking robot 2 that has detected the suspicious target. The management device 4 also collects positional information and the like of each long-range drone 3 from a plurality of long-range drones 3.

The management device 4 may generate information relating to a travel route of the tracking robot 2. The management device 4 may also generate information relating to the first flight route of the short-range drone 11. The management device 4 may also generate information relating to the second flight route of the long-range drone 3.

The communication unit 40 is connected to the network N by wire or wirelessly. The communication unit 40 transmits and receives information to and from the control device 13 of the tracking robot 2, the short-range drone 11, and the long-range drone 3 via the network N.

The communication unit 40 receives various types of information detected by the detection unit 12 from the control device 13 of the tracking robot 2. The communication unit 40 receives an image captured by the camera 20 from the short-range drone 11. The communication unit 40 receives positional information from the short-range drone 11, the tracking mark 21, and the long-range drone 3. The communication unit 40 receives an image captured by the camera from the long-range drone 3.

The storage unit 41 is realized by, for example, a semiconductor memory element such as RAM or flash memory, or a storage device such as an HDD, an SSD, or an optical disk. Various programs, various data, and the like are stored in the storage unit 41. For example, various types of information and the like detected by the detection unit 12 of each tracking robot 2 are stored in the storage unit 41.

The control unit 42 is a controller, and includes, for example, a microcomputer having a CPU, a ROM, a RAM, input/output ports, and the like, and various circuits. The control unit 42 may also be configured by hardware such as an integrated circuit such as an ASIC or an FPGA.

The control unit 42 may generate information relating to a travel route of the robot body 10. For example, the control unit 42 generates information relating to a travel route of the robot body 10 by a text generation model (a so-called AI chat engine). As described above, the text generation model may be interpreted as an algorithm and computation for automatic dialogue processing by characters.

The control unit 42 generates a question about the suspicious target from various types of information detected by the detection unit 12 of the tracking robot 2. First, the control unit 42 generates a question by, for example, a language generation model.

For example, when movement is detected by an infrared sensor of the tracking robot 2, a question is generated: "The infrared sensor has detected such movement. Is a person making such movement a suspicious person? As criminal psychology, what kind of action will be taken next?"

By inputting such a question to the text generation model, for example, the control unit 42 generates a sentence such as "There is a high possibility of a suspicious person. When sensing a sign of a person, the person takes an action of running away." By transmitting the generated sentence to the tracking robot 2 as information relating to the travel route, the tracking robot 2 sets the travel route so as to approach a person estimated to be a suspicious person at a low speed.

Further, for example, when a sound is detected by a sensor that detects fine sound of the tracking robot 2, a question is generated: "A beep sound is heard from 2 m ahead. What sound is this?"

By inputting such a question to the text generation model, for example, the control unit 42 generates a sentence such as "A warning sound is sounding." By transmitting the generated sentence to the tracking robot 2 as information relating to the travel route, the tracking robot 2 identifies it as a suspicious target and, for example, sets the travel route so as to approach the suspicious target by the shortest route.

The control unit 42 may similarly generate information relating to the travel route of the tracking robot 2 based on other information detected by the detection unit 12 of the tracking robot 2. The control unit 42 may generate information relating to the travel route of the tracking robot 2 based on information obtained by a high-sensitivity camera capable of 360-degree sensing, LiDAR, a thermal camera, a radar, and the like. The control unit 42 may generate information relating to the travel route of the tracking robot 2 based on information obtained by sensors for vision recognition, ultrasonic waves, vibration, ultraviolet rays, electromagnetic waves, and the like.

Further, information relating to the travel route of the tracking robot 2 may similarly be generated based on a plurality of pieces of information detected by the detection unit 12 of the tracking robot 2. The control unit 42 may set the travel route of the tracking robot 2.

By information relating to the travel route of the tracking robot 2 being generated by a document generation model, the tracking robot 2 can, for example, accurately determine a suspicious target, and can also bring the tracking robot 2 close to the suspicious target without being noticed by the suspicious target. Therefore, for example, the tracking robot 2 can improve a hit rate of the tracking mark 21 fired from the short-range drone 11. In this way, by information relating to the travel route of the tracking robot 2 being generated by the document generation model, trackability of the suspicious target by the tracking robot 2 and the like can be improved.

The control unit 42 may also generate information relating to at least one of the first flight route of the short-range drone 11 and the second flight route of the long-range drone 3. For example, the control unit 42 generates information relating to the first flight route by a text generation model.

For example, when a suspicious target is detected by the tracking robot 2, the suspicious target is a car, and "AA-BB" is detected as a number of the car of the suspicious target, the control unit 42 creates, by a language generation model, a sentence saying "Photograph a car with the number AA-BB." Then, by inputting the generated sentence to the text generation model, the control unit 42 generates information relating to the first flight route. For example, the control unit 42 photographs the car with the number "AA-BB" by the camera of the short-range drone 11, and generates a flight program of the short-range drone 11 for tracking the car with the number "AA-BB." Then, the generated flight program is generated as information relating to the first flight route. By the generated information relating to the first flight route being transmitted to the short-range drone 11, the short-range drone 11 flies so as to track the car with the number "AA-BB." An image captured by the camera of the short-range drone 11 is transmitted to the management device 4.

For example, by information relating to the first flight route of the short-range drone 11 being generated by a document generation model, trackability of the suspicious target by the short-range drone 11 can be improved.

Generation of information relating to the travel route of the tracking robot 2 and the like using the text generation model may be executed by the tracking robot 2.

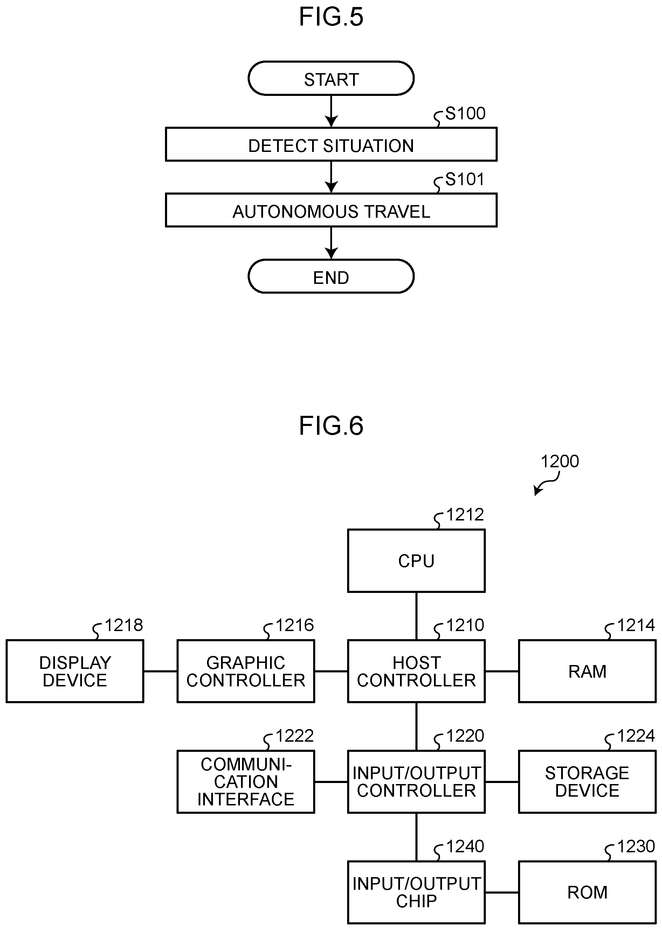

Next, a travel control process according to the embodiment will be described with reference to FIG. 5. FIG. 5 is a flowchart for explaining the travel control process according to the first embodiment. The travel control process is executed by the control device 13 of the tracking robot 2.

The detection unit 12 detects a situation around the robot body 10 (S100). For example, the detection unit 12 detects various types of information from cameras, radars, microphones, and other sensors provided on the head 10d, the torso 10a, the fingers 10e, and the like of the robot body 10.

The control unit 32 causes the robot body 10 to travel autonomously according to the situation detected by the detection unit 12 (S101). For example, the control unit 32 causes the robot body 10 to travel autonomously using a result obtained by inputting the situation detected by the detection unit 12 to a trained model that outputs motion information relating to movement of each of the two legs 10b according to input of the situation around the robot body 10.

The tracking robot 2 includes the robot body 10, the detection unit 12, and the control unit 32. The robot body 10 is capable of autonomous traveling. The detection unit 12 detects a situation around the robot body 10. The control unit 32 causes the robot body 10 to travel autonomously according to the situation detected by the detection unit 12. The robot body 10 includes the torso 10a, the two legs 10b, and the rollers 14. The legs 10b are movably attached to the torso 10a. The rollers 14 are provided one on each of the two legs 10b and move the robot body 10. The central portion 14a of each roller 14 is provided at a position substantially intermediate between a knee portion and the ground in each of the two legs 10b.

The tracking robot 2 can track a suspicious target because it can travel autonomously while maintaining balance according to the situation detected from the detection unit 12 such as a gyroscope, without programming. Therefore, the tracking robot 2 can improve trackability of the suspicious target.

The tracking robot 2 is also a humanoid robot that can travel autonomously while maintaining balance by two rollers 14 provided at a natural height. Therefore, the tracking robot 2 has not only tracking of a suspicious target but also assembly, picking, packing, and all other capabilities, and can execute home delivery, food delivery, work inside and outside a factory, transport, and the like more quickly and flexibly.

The control unit 32 also causes the robot body 10 to travel autonomously using a result obtained by inputting the situation detected by the detection unit 12 to a trained model that outputs motion information relating to movement of each of the two legs 10b according to input of the situation around the robot body 10.

Thereby, the tracking robot 2 travels autonomously according to a result obtained from a trained model trained by various types of information, and therefore can travel autonomously while maintaining balance according to the situation, far more quickly and safely and reliably than a human, even on irregular footholds such as a construction site, for example.

The motion information also includes at least one of thigh lifting and knee bending of each of the two legs 10b, and rotational speeds of the respective rollers 14 provided one on each of the two legs 10b.

Thereby, the tracking robot 2 can travel autonomously while maintaining balance by appropriately adjusting thigh lifting and knee bending of each of the two legs 10b and rotational speeds of the respective rollers 14. For example, even when going up and down stairs, the tracking robot 2 can travel autonomously while maintaining balance far more quickly and reliably than a human by appropriate thigh lifting and knee bending of each of the two legs 10b. Further, even when cornering at a high speed, the tracking robot 2 can create an optimum body inclination by appropriate thigh lifting, knee bending, and adjustment of rotational speeds of the respective rollers 14, and can travel autonomously safely and reliably without causing an accident.

The robot body 10 is also provided with a drive mechanism for driving each of the rollers 14, and the main motor 15 of the drive mechanism is provided at a buttock portion in each of the two legs 10b.

Thereby, the tracking robot 2 can provide the main motor 15 having a large capacity at an appropriate position that does not hinder autonomous traveling of the robot body 10.

The robot body 10 is also substantially life-size with a general adult male human.

Thereby, similarly to the size and center position of objects used in almost all work in human society, the tracking robot 2 can optimize the size and center position of the robot body 10 in accordance with the average height of an adult male, which is the greatest common divisor.

FIG. 6 is a diagram schematically showing one example of a computer hardware configuration functioning as the tracking robot 2 or the management device 4. A program installed in a computer 1200 can cause the computer 1200 to function as one or more "units" of the device according to the present embodiment, or can cause the computer 1200 to perform operations associated with the device according to the present embodiment or the one or more "units," and/or can cause the computer 1200 to perform a process according to the present embodiment or steps of the process. Such a program may be executed by a CPU 1212 so as to cause the computer 1200 to perform specific operations associated with some or all of the blocks in the flowcharts and block diagrams described herein.

The computer 1200 according to the present embodiment includes the CPU 1212, a RAM 1214, and a graphic controller 1216, and they are mutually connected by a host controller 1210. The computer 1200 also includes input/output units such as a communication interface 1222, a storage device 1224, a DVD drive, and an IC card drive, and they are connected to the host controller 1210 via an input/output controller 1220. The DVD drive may be a DVD-ROM drive, a DVD-RAM drive, or the like. The storage device 1224 may be a hard disk drive, a solid-state drive, or the like. The computer 1200 also includes input/output units such as a ROM 1230 and a keyboard, and they are connected to the input/output controller 1220 via an input/output chip 1240.

The CPU 1212 operates according to programs stored in the ROM 1230 and the RAM 1214, thereby controlling each unit. The graphic controller 1216 acquires image data generated by the CPU 1212 in a frame buffer or the like provided in the RAM 1214 or in itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides it to the storage device 1224. The IC card drive reads programs and data from an IC card and/or writes programs and data to the IC card.

The ROM 1230 stores therein a boot program and the like executed by the computer 1200 at the time of activation, and/or a program dependent on hardware of the computer 1200. The input/output chip 1240 may also connect various input/output units to the input/output controller 1220 via a USB port, a parallel port, a serial port, a keyboard port, a mouse port, and the like.

A program is provided by a computer-readable storage medium such as a DVD-ROM or an IC card. The program is read from the computer-readable storage medium, installed in the storage device 1224, the RAM 1214, or the ROM 1230, which is also an example of a computer-readable storage medium, and executed by the CPU 1212. Information processing described in these programs is read into the computer 1200, resulting in cooperation between the program and the various types of hardware resources described above. An apparatus or method may be configured by realizing operation or processing of information according to use of the computer 1200.

For example, when communication is executed between the computer 1200 and an external device, the CPU 1212 may execute a communication program loaded in the RAM 1214 and instruct the communication interface 1222 to perform communication processing based on processing described in the communication program. Under control of the CPU 1212, the communication interface 1222 reads transmission data stored in a transmission buffer area provided in the RAM 1214, the storage device 1224, a DVD-ROM, or a recording medium such as an IC card, transmits the read transmission data to a network, or writes reception data received from the network into a reception buffer area or the like provided on the recording medium.

The CPU 1212 may also cause all or a necessary part of a file or database stored in an external recording medium such as the storage device 1224, the DVD drive (DVD-ROM), an IC card, or the like to be read into the RAM 1214, and execute various types of processing on the data on the RAM 1214. The CPU 1212 may then write back the processed data to the external recording medium.

Various types of information such as various types of programs, data, tables, and databases are stored in the recording medium and may be subjected to information processing. The CPU 1212 may execute various types of processing on data read from the RAM 1214, including various types of operations, information processing, condition determination, conditional branching, unconditional branching, information retrieval/replacement, and the like, described throughout the present disclosure and specified by an instruction sequence of a program, and may write back the result to the RAM 1214. The CPU 1212 may also search for information in a file, a database, or the like in the recording medium. For example, when a plurality of entries each having an attribute value of a first attribute associated with an attribute value of a second attribute are stored in the recording medium, the CPU 1212 may search, from among the plurality of entries, for an entry matching a condition in which the attribute value of the first attribute is specified, read the attribute value of the second attribute stored in the entry, and thereby acquire the attribute value of the second attribute associated with the first attribute satisfying a predetermined condition.

The above-described program or software module may be stored in a computer-readable storage medium on or near the computer 1200. A recording medium such as a hard disk or a RAM provided in a server system connected to a dedicated communication network or the Internet can also be used as the computer-readable storage medium, thereby providing the program to the computer 1200 via the network.

Blocks in the flowcharts and block diagrams in the present embodiment may represent steps of a process in which operations are executed or "units" of an apparatus having a role of executing operations. Specific steps and "units" may be implemented by a dedicated circuit, a programmable circuit supplied together with computer-readable instructions stored on a computer-readable storage medium, and/or a processor supplied together with computer-readable instructions stored on a computer-readable storage medium. The dedicated circuit may include digital and/or analog hardware circuits, and may include an integrated circuit (IC) and/or a discrete circuit. The programmable circuit may include, for example, a reconfigurable hardware circuit including logical product, logical sum, exclusive logical sum, negative logical product, negative logical sum, and other logical operations, flip-flops, registers, and memory elements, such as a field programmable gate array (FPGA), a programmable logic array (PLA), and the like.

The computer-readable storage medium may include any tangible device capable of storing instructions executed by an appropriate device, and as a result, the computer-readable storage medium having instructions stored therein includes a product including instructions that can be executed so as to create means for executing operations specified in the flowchart or block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disc read only memory (CD-ROM), a digital versatile disc (DVD), a Blu-ray (registered trademark) disc, a memory stick, an integrated circuit card, and the like.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or object-oriented programming languages such as Smalltalk (registered trademark), JAVA (registered trademark), C++, and the like, and conventional procedural programming languages such as the "C" programming language or similar programming languages.

The computer-readable instructions may be provided to a processor of a general-purpose computer, a special-purpose computer, or another programmable data processing apparatus, or to a programmable circuit, locally or via a wide area network (WAN) such as a local area network (LAN), the Internet, or the like, so that the processor of the general-purpose computer, the special-purpose computer, or the other programmable data processing apparatus, or the programmable circuit, executes the computer-readable instructions to generate means for executing operations specified in the flowchart or block diagram. Examples of the processor include a computer processor, a processing unit, a microprocessor, a digital signal processor, a controller, a microcontroller, and the like.

### (Second Embodiment)

A tracking system 1 including a tracking robot 2 according to a second embodiment will be described. Here, description will be given mainly of portions different from those of the first embodiment, and description of the same configurations and processing as those of the first embodiment will be omitted.

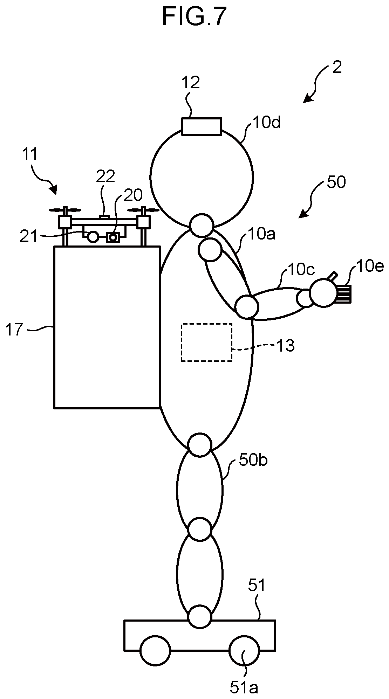

Next, the tracking robot 2 will be described with reference to FIGS. 7 to 9. FIGS. 7 to 9 are diagrams showing an outline of the tracking robot 2 according to the second embodiment.

As shown in FIG. 7, the tracking robot 2 includes a robot body 50, the short-range drone 11, the detection unit 12, and the control device 13.

The robot body 50 is one in which a one-legged columnar humanoid robot is attached to an automated guided vehicle or the like such as a base AGV (Automated Guided Vehicle). The robot body 50 includes the torso 10a, one leg 50b, and a moving unit 51 that moves the robot body 50.

The robot body 50 has at least a waist joint located at an upper end of the leg 50b, an ankle joint located at a lower end of the leg 50b, and a knee joint located between the waist and the ankle. That is, the robot body 50 has at least three joints: a joint of a portion corresponding to a human waist, a joint of a portion corresponding to a human ankle, and a joint of a portion corresponding to a human knee.

For example, when the torso 10a imitates an upper body of a human, the robot body 50 can further include the arms 10c and the head 10d. The robot body 50 can also further have a joint above the waist joint, which is the third joint from the bottom. For example, the robot body 50 further has at least one of a shoulder joint located at an upper end of the arm 10c, a wrist joint located at a lower portion of the arm 10c, a joint of the finger 10e located at a substantially lower end of the arm 10c, and a neck joint located at a lower end of the head 10d.

Here, the leg 50b is movably attached to the torso 10a at the waist, and is movably attached to the moving unit 51 at the ankle. The arm 10c is movably attached to the torso 10a at the shoulder. The head 10d is movably attached to the torso 10a at the neck.

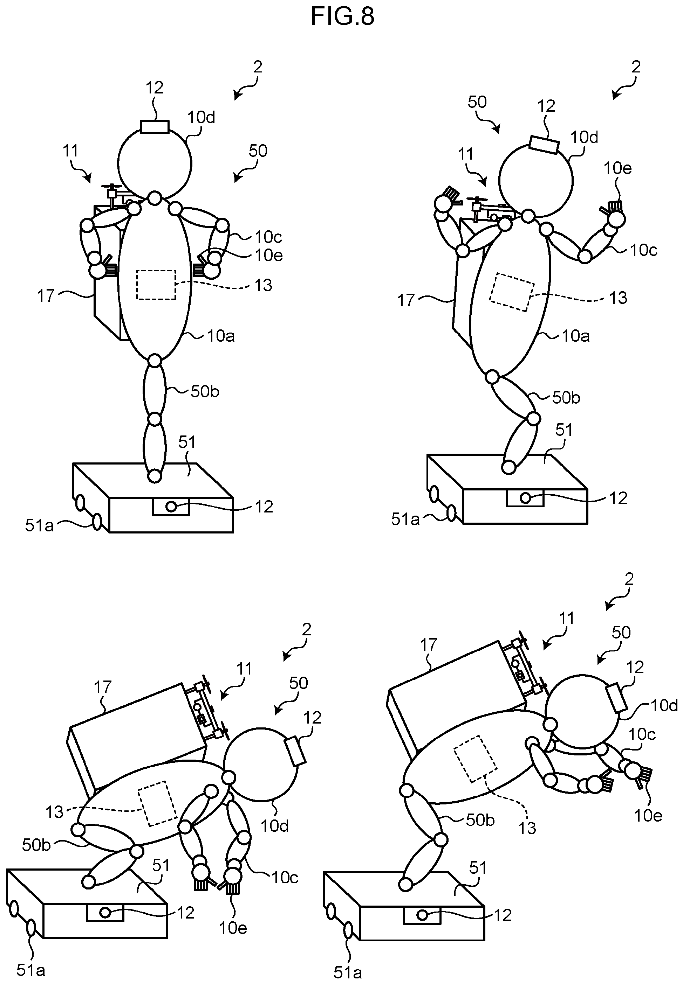

The robot body 50 can freely change positions and orientations of the torso 10a, the leg 50b, the arm 10c, and the head 10d by moving the above-described joints forward, backward, leftward, and rightward, or rotating them with respect to a horizontal plane. Thereby, the robot body 50 can make human-like movements as shown in FIG. 8.

The robot body 50 is provided with drive mechanisms such as motors for moving each part such as the leg 50b, the arm 10c, and the head 10d.

The moving unit 51 is, for example, an automated guided vehicle. For example, one moving unit 51 is attached to one leg 50b. One or more rollers 51a such as wheels are provided on one moving unit 51. For example, four rollers 51a are provided on one moving unit 51. The number of rollers 51a for one moving unit 51 is not limited thereto.

The rollers 51a can rotate relative to the moving unit 51. For example, the rollers 51a rotate by transmission of rotation generated by a motor. The robot body 50 can travel by the rollers 51a rotating.

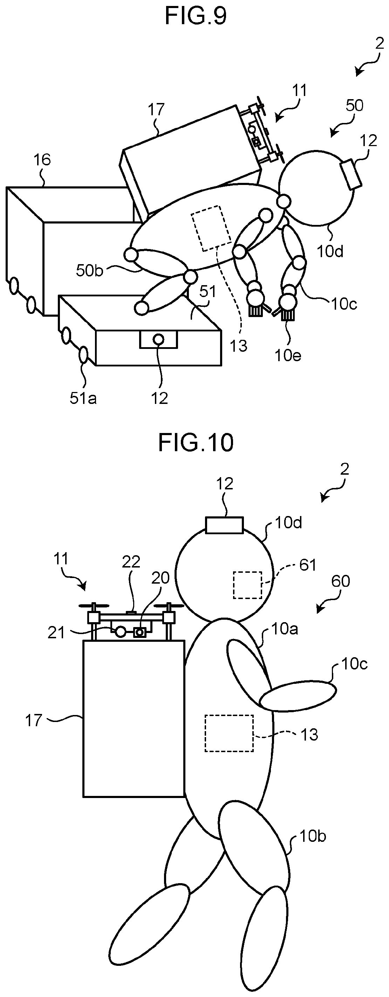

A configuration in which a removable box portion is attached to the robot body 50 can also be adopted. In this case, for example, as shown in FIG. 9, a removable box portion 52 may be connected to the moving unit 51, or the box portion 52 may be gripped by the arm 10c and the finger 10e.

The detection unit 12 is provided, for example, on at least one of the moving unit 51 and the head 10d of the robot body 50.

The robot control unit 37 of the control device 13 causes the robot body 50 to travel autonomously by controlling driving of the leg 50b, the moving unit 51, and the arm 10c of the robot body 50. The robot control unit 37 controls driving of the leg 50b, the moving unit 51, and the arm 10c of the robot body 50 based on various types of information detected by the detection unit 12 so that, for example, the robot body 50 travels while avoiding an obstacle.

Next, a travel control process according to the second embodiment will be described with reference to FIG. 5.

The detection unit 12 detects a situation around the robot body 50 (S100). For example, the detection unit 12 detects various types of information from cameras and sensors provided on the moving unit 51, the head 10d of the robot body 50, and the like.

The control unit 32 causes the robot body 50 to travel autonomously according to the situation detected by the detection unit 12 (S101). For example, the control unit 32 determines rotational speeds of the rollers 51a and a posture of the robot body 50 that can avoid an obstacle around the robot body 50, rotates the rollers 51a by the rotational speeds, and moves the joints so as to attain the posture, thereby changing positions and orientations of the torso 10a and the leg 50b. Thereby, the control unit 32 causes the robot body 50 to travel autonomously while making the robot body 50 perform human-like movements.

The tracking robot 2 includes the robot body 50, the detection unit 12, and the control unit 32. The robot body 50 is capable of autonomous traveling. The detection unit 12 detects a situation around the robot body 50. The control unit 32 causes the robot body 50 to travel autonomously according to the situation detected by the detection unit 12. The robot body 50 includes the torso 10a, the one leg 50b, and the moving unit 51. The robot body 50 has at least a waist joint located at an upper end of the leg 50b, an ankle joint located at a lower end of the leg 50b, and a knee joint located between the waist and the ankle. The leg 50b is movably attached to the torso 10a at the waist, and is movably attached to the moving unit 51 at the ankle. The moving unit 51 is provided with rollers 51a.

Thereby, the tracking robot 2 can rotate the rollers 51a of the moving unit 51 by rotational speeds according to the situation around the robot body 50 detected from the detection unit 12 and cause the robot body 50 to travel autonomously, and therefore can track a suspicious target. Therefore, the tracking robot 2 can improve trackability of the suspicious target.

The tracking robot 2 can also change positions and orientations of the torso 10a and the leg 50b by moving the joints, and can cause the robot body 50 to travel autonomously while making the robot body 50 perform human-like movements. Therefore, the tracking robot 2 can also function as a cargo transport robot in a warehouse, a worker replacement robot in a factory, and the like.

The moving unit 51 is also an automated guided vehicle. Thereby, the tracking robot 2 can function, for example, not merely as an automated guided vehicle, but as a cargo transport robot in a warehouse or the like that transports articles and the like while making the robot body 50 perform human-like movements.

A removable box portion 52 is attached to the robot body 50. Thereby, for example, when articles and the like are contained in the box portion 52, the tracking robot 2 can transport the articles and the like in the box portion 52 by moving the robot body 50 by the moving unit 51.

### (Third Embodiment)

A tracking system 1 including a tracking robot 2 according to a third embodiment will be described. Here, description will be given mainly of portions different from those of the first embodiment, and description of the same configurations and processing as those of the first embodiment will be omitted. The tracking system 1 is a robot system including the tracking robot 2.

Next, the tracking robot 2 will be described with reference to FIG. 10. FIG. 10 is a diagram showing an outline of the tracking robot 2 according to the third embodiment.

The tracking robot 2 is provided in, for example, a facility requiring security. Such a facility is, for example, a facility used by an unspecified large number of people, such as an airport, a station, a bus terminal, a commercial facility, or an office building. Although the facility has been specifically shown above, these are merely examples and are not limiting. The tracking robot 2 is not necessarily required to be provided in a facility requiring security, and may be provided in another facility or place.

The tracking robot 2 includes a robot body 60, the short-range drone 11, the detection unit 12, the control device 13, and a notification unit 61. The tracking robot 2 is capable of autonomous traveling, and tracks a suspicious target when the suspicious target is detected. The suspicious target includes, for example, a person behaving suspiciously, a criminal in an incident, and the like. The suspicious target is not limited to a person, and may be a vehicle ridden by a person who behaved suspiciously.

The suspicious target detected by the tracking robot 2 may also be an object. An object that is a suspicious target is an object prohibited from being brought into a facility in which the tracking robot 2 is provided. For example, objects that are suspicious targets include metal objects (blades such as knives and scissors), weapons (guns, knives, and the like), and illegal drugs (narcotic drugs and the like), but these are examples and are not limiting.

The robot body 60 is, for example, a humanoid robot. The robot body 60 includes the torso 10a, the legs 10b, the arms 10c, and the head 10d. The robot body 60 is not limited to a humanoid robot.

The detection unit 12 includes a metal detector. As the metal detector, for example, an electromagnetic induction type, a magnetic induction type, or an X-ray type is used, but the metal detector is not limited thereto. The detection unit 12 detects a metal object existing around the robot body 60 as a surrounding condition.

The detection unit 12 also includes a shape detection sensor capable of detecting a shape of an object. As the shape detection sensor, for example, one that detects a shape of an object using infrared rays is used, but the shape detection sensor is not limited thereto, and may be another type of sensor such as one using X-rays. The detection unit 12 detects a shape of an object existing around the robot body 60 as a surrounding condition.

The detection unit 12 also includes an odor detection sensor (odor detector) capable of detecting an odor (smell) of an object. As the odor detection sensor, for example, a semiconductor type or a quartz oscillator type is used, but the odor detection sensor is not limited thereto. The detection unit 12 detects an odor of an object existing around the robot body 60 as a surrounding condition.

The detection unit 12 also detects, as a surrounding condition, identification information capable of identifying a person existing around the robot body 60. The identification information includes, for example, facial information of the person, personal information stored in an identification document (ID card, passport, driver's license, and the like) possessed by the person, and the like. When the identification information is facial information of the person, the detection unit 12 includes a camera and detects facial information of the person imaged by the camera as the identification information. When the identification information is personal information of the identification document, the detection unit 12 includes a reader and detects the personal information of the identification document read by the reader as the identification information.

The detection unit 12 outputs various types of surrounding conditions detected as described above to the control device 13. The detection unit 12 may transmit the various types of detected surrounding conditions to the management device 4 via the network N.

The detection unit 12 may be configured to include all of the above-described camera, metal detector, shape detection sensor, odor detection sensor, and reader, or may be configured to include some of them.

When a suspicious target is detected, the notification unit 61 gives notification that the suspicious target has been detected. The notification unit 61 includes, for example, a speaker, outputs voice information indicating that the suspicious target has been detected, and gives notification to the surroundings. The voice information may be an alarm sound such as a buzzer, or may be a voice message indicating that the suspicious target has been detected.

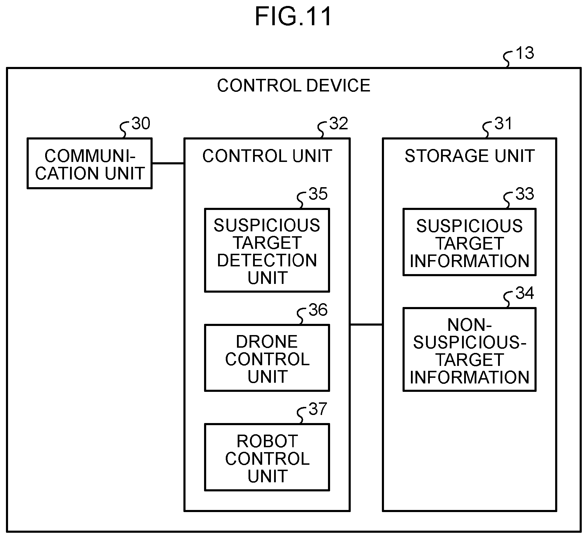

As shown in FIG. 11, the control device 13 includes the communication unit 30, the storage unit 31, and the control unit 32. FIG. 11 is a functional block diagram showing an outline of the control device 13 of the tracking robot 2 according to the third embodiment.

Suspicious target information 33, non-suspicious target information 34, various programs, various data, and the like are stored in the storage unit 31.

The suspicious target information 33 is information relating to a suspicious target. The suspicious target information 33 includes suspicious target shape information, suspicious target odor information, and suspicious target person information. The suspicious target shape information is information indicating a shape of a suspicious target, and is, for example, information indicating a shape of an object (a weapon such as a gun or a knife) prohibited from being brought into a facility in which the tracking robot 2 is provided. The suspicious target odor information is information indicating an odor of a suspicious target, and is, for example, information indicating an odor of an object (an illegal drug such as a narcotic drug) prohibited from being brought into a facility in which the tracking robot 2 is provided. The suspicious target person information is information indicating a person who is a suspicious target, and is, for example, information indicating a person prohibited from entering a facility in which the tracking robot 2 is provided. The suspicious target person information includes, for example, facial information of a criminal in an incident (a wanted criminal), facial information of a suspicious person who behaved suspiciously in the facility in the past, and the like.

The non-suspicious target information 34 is information relating to a non-suspicious target, in other words, information relating to something that does not correspond to a suspicious target. The non-suspicious target information 34 includes non-suspicious target person information. The non-suspicious target person information is information indicating a person who is a non-suspicious target, and is, for example, information indicating a person permitted to enter a facility in which the tracking robot 2 is provided. The non-suspicious target person information includes, for example, facial information and personal information of an employee of the facility, and when the facility is an airport, facial information and personal information of a passenger of an airplane, and the like.

The above-described suspicious target information 33 and non-suspicious target information 34 are information determined in advance. The suspicious target information 33 and the non-suspicious target information 34 are stored in advance in the storage unit 31.

The suspicious target detection unit 35 detects a suspicious target (an object or a person) existing around the robot body 60 based on the surrounding condition detected by the detection unit 12. For example, when a metal object (a blade such as a knife or scissors) existing around the robot body 60 is detected by the detection unit 12 including a metal detector, the suspicious target detection unit 35 detects the object as a suspicious target.

The suspicious target detection unit 35 also compares a shape of an object existing around the robot body 60 detected by the detection unit 12 including the shape detection sensor with suspicious target shape information of the suspicious target information 33 stored in the storage unit 31. When the shape of the object detected by the detection unit 12 is a suspicious target shape (a weapon such as a gun or a knife), the suspicious target detection unit 35 detects the object as a suspicious target.

The suspicious target detection unit 35 also compares an odor of an object existing around the robot body 60 detected by the detection unit 12 including the odor detection sensor with suspicious target odor information of the suspicious target information 33 stored in the storage unit 31. When the odor of the object detected by the detection unit 12 is a suspicious target odor (an odor of an illegal drug such as a narcotic drug), the suspicious target detection unit 35 detects the object as a suspicious target.

The suspicious target detection unit 35 also compares identification information (facial information) of a person existing around the robot body 60 detected by the detection unit 12 including the camera with suspicious target person information of the suspicious target information 33 stored in the storage unit 31. Based on the identification information detected by the detection unit 12, when the person of the identification information is a suspicious target person (a wanted criminal or a suspicious person), the suspicious target detection unit 35 detects the person as a suspicious target.

The suspicious target detection unit 35 may also request presentation of an identification document from a person existing around the robot body 60, and perform authentication as to whether the person is a suspicious target or a non-suspicious target. For example, the suspicious target detection unit 35 requests a person existing around to cause the identification document to be read by the detection unit 12 including the reader. The suspicious target detection unit 35 compares identification information (personal information) of the identification document detected by the detection unit 12 with suspicious target person information of the non-suspicious target information 34 stored in the storage unit 31. Based on the identification information detected by the detection unit 12, when the person of the identification information is a non-suspicious target (an employee of the facility or a passenger of an airplane), the suspicious target detection unit 35 detects the person as a non-suspicious target. When facial information is registered in the identification document, the suspicious target detection unit 35 may detect the person as a non-suspicious target when facial information of the person who presented the identification document matches facial information of the person detected by the detection unit 12 including the camera.

On the other hand, when a person existing around the robot body 60 refuses to present an identification document, or when the person of the identification information is not a non-suspicious target based on the identification information of the identification document, the suspicious target detection unit 35 may detect the person as a suspicious target.

When a suspicious target is detected as described above, the suspicious target detection unit 35 actuates the notification unit 61 and gives notification to the surroundings that the suspicious target has been detected. The suspicious target detection unit 35 also notifies the management device 4 via the network N that the suspicious target has been detected.

In the present embodiment, after a suspicious target is detected, when a person who is the suspicious target runs away, or when a person possessing an object that is the suspicious target runs away, tracking of the suspicious target is performed.

The robot control unit 37 causes the robot body 60 to travel autonomously by controlling driving of the legs 10b and the arms 10c of the robot body 60. The robot control unit 37 controls driving of the legs 10b and the arms 10c of the robot body 60 based on various types of information detected by the detection unit 12 so that, for example, the robot body 60 travels while avoiding an obstacle.

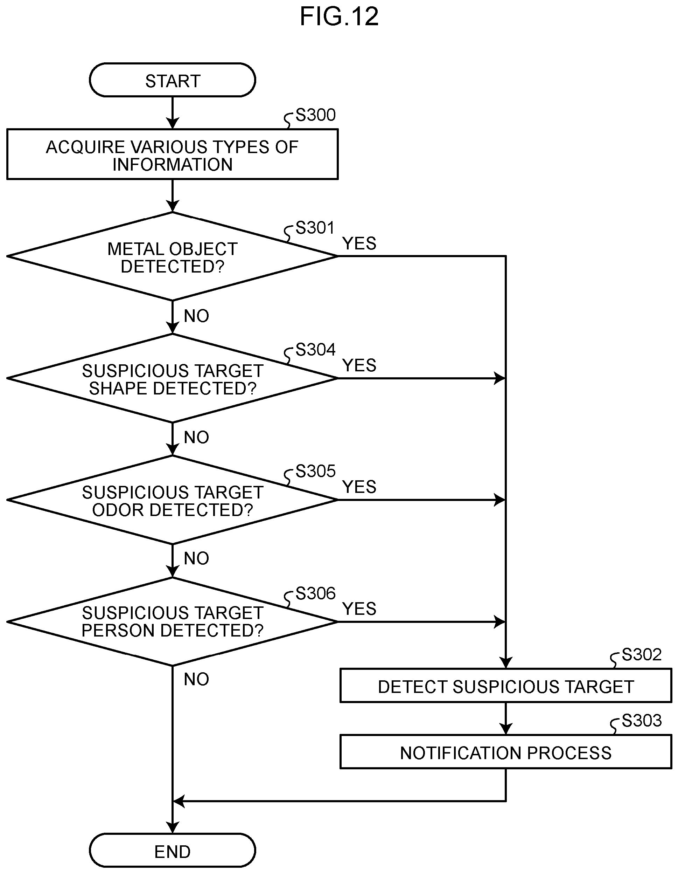

Next, a suspicious target detection process according to the third embodiment will be described with reference to FIG. 12. FIG. 12 is a flowchart for explaining the suspicious target detection process executed by the tracking robot 2 according to the third embodiment. The suspicious target detection process is executed by the control device 13 of the tracking robot 2.

The control unit 32 acquires various types of information detected by the detection unit 12 (S300). Based on the acquired various types of information, the control unit 32 determines whether a metal object (a blade such as a knife or scissors) existing around the robot body 60 has been detected (S301). When a metal object has been detected (S301: Yes), the control unit 32 detects the object as a suspicious target (S302). Next, the control unit 32 executes a notification process for giving notification that the suspicious target has been detected (S303).

When a metal object has not been detected (S301: No), the control unit 32 determines, based on the acquired various types of information, whether a shape of an object existing around the robot body 60 is a suspicious target shape (a weapon such as a gun or a knife) (S304). When the shape of the object is a suspicious target shape (S304: Yes), the control unit 32 proceeds to S302, detects the object as a suspicious target, and executes the notification process of S303.

When the odor of the object is not a suspicious target odor (S305: No), the control unit 32 determines, based on the acquired various types of information, whether an odor of an object existing around the robot body 60 is a suspicious target odor (an odor of an illegal drug such as a narcotic drug) (S305). When the odor of the object is a suspicious target odor (S305: Yes), the control unit 32 proceeds to S302, detects the object as a suspicious target, and executes the notification process of S303.

When the odor of the object is not a suspicious target odor (S305: No), the control unit 32 determines, based on identification information of a person existing around the robot body 60, whether the person of the identification information is a suspicious target person (a wanted criminal or a suspicious person) (S306). When the person of the identification information is a suspicious target person (S306: Yes), the control unit 32 proceeds to S302, detects the person as a suspicious target, and executes the notification process of S303. On the other hand, when the person of the identification information is not a suspicious target person (S306: No), the control unit 32 ends the process.

Although an example has been shown above in which processing is performed in the order of S301, S304, S305, and S306, the present invention is not limited thereto. That is, the order of the respective processes of S301, S304, S305, and S306 can be arbitrarily set, and all or some of the respective processes may be executed at the same timing.

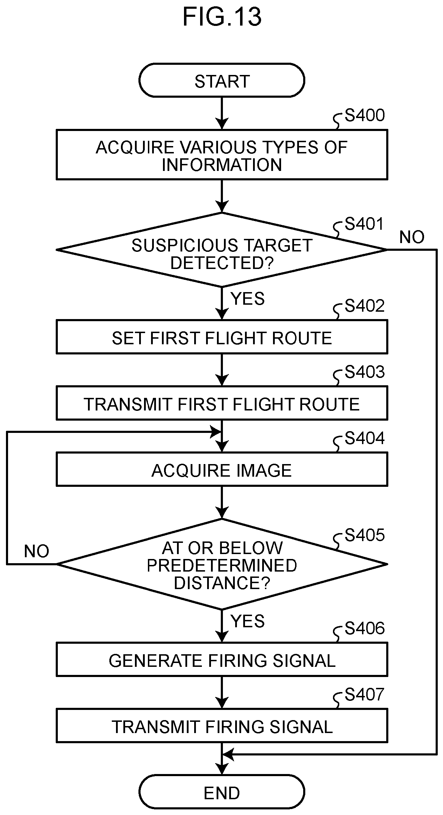

Next, a control process of the short-range drone 11 according to the third embodiment will be described with reference to FIG. 13. FIG. 13 is a flowchart for explaining the control process of the short-range drone 11 according to the third embodiment. The control process of the short-range drone 11 is executed by the control device 13 of the tracking robot 2.

The control unit 32 acquires various types of information detected by the detection unit 12 (S400). Based on the acquired various types of information, the control unit 32 determines whether a suspicious target has been detected (S401). For example, the control unit 32 detects a suspicious target by the above-described suspicious target detection process or by executing predetermined image processing on an image captured by a high-sensitivity camera.

When a suspicious target has not been detected (S401: No), the control unit 32 ends the present process. When a suspicious target has been detected (S401: Yes), the control unit 32 sets a first flight route of the short-range drone 11 (S402).

The control unit 32 transmits the first flight route to the short-range drone 11 (S403). Thereby, the short-range drone 11 takes off from the base portion 17 of the tracking robot 2.

The control unit 32 acquires an image captured by the camera 20 of the short-range drone 11 (S404).

The control unit 32 determines whether a distance to the suspicious target is equal to or less than a predetermined distance (S405). When the distance to the suspicious target is greater than the predetermined distance (S405: No), the control unit 32 continues tracking of the suspicious target and acquires an image captured by the camera 20 of the short-range drone 11 (S404).

When the distance to the suspicious target is equal to or less than the predetermined distance (S405: Yes), the control unit 32 generates a firing signal of the tracking mark 21 (S406). The control unit 32 transmits the generated firing signal to the short-range drone 11 (S407). Thereby, the tracking mark 21 is fired from the short-range drone 11 toward the suspicious target.

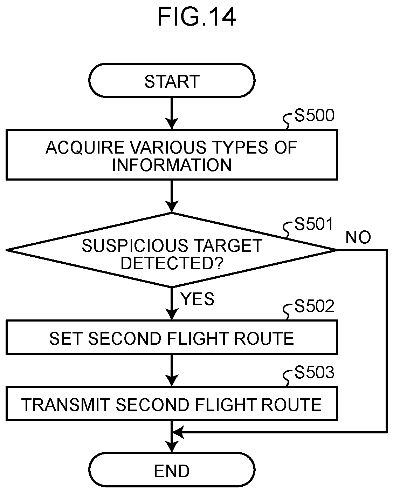

Next, a control process of the long-range drone 3 according to the third embodiment will be described with reference to FIG. 14. FIG. 14 is a flowchart for explaining the control process of the long-range drone 3 according to the third embodiment. The control process of the long-range drone 3 is executed by the control device 13 of the tracking robot 2.

The control unit 32 acquires various types of information detected by the detection unit 12 (S500). Based on the acquired various types of information, the control unit 32 determines whether a suspicious target has been detected (S501).

When a suspicious target has not been detected (S501: No), the control unit 32 ends the present process. When a suspicious target has been detected (S501: Yes), the control unit 32 sets a second flight route of the long-range drone 3 (S502).

The control unit 32 transmits the second flight route to the short-range drone 11 (S503). Thereby, the long-range drone 3 takes off from the station.

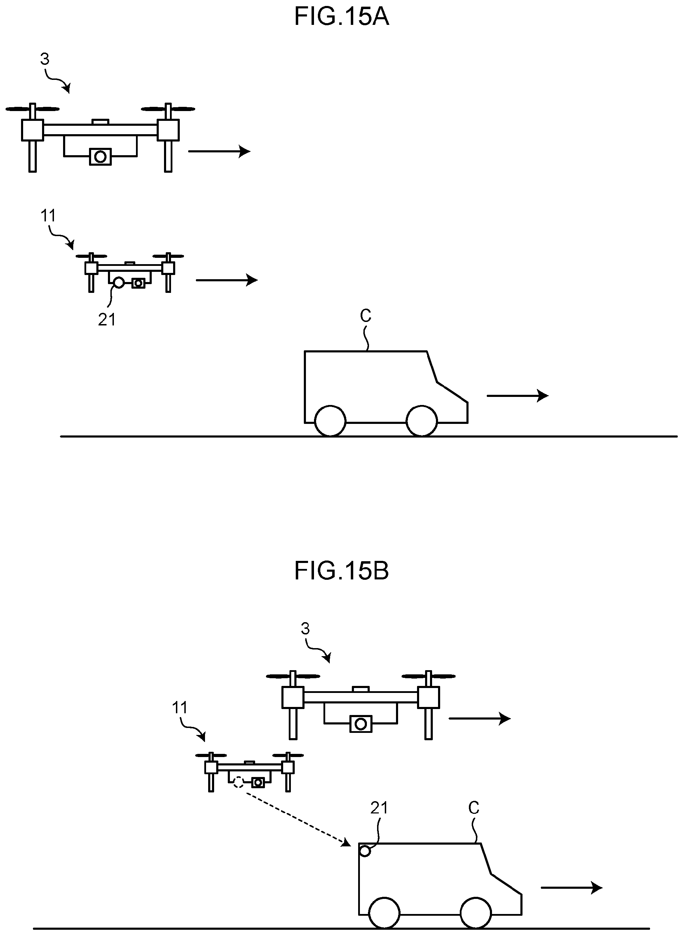

The long-range drone 3 flies based on positional information of the tracking mark 21. Therefore, as shown in FIG. 15A, when the short-range drone 11 has not fired the tracking mark 21 at the suspicious target C, the long-range drone 3 tracks the short-range drone 11 and flies so as to approach the suspicious target C. Then, as shown in FIG. 15B, when the tracking mark 21 is fired from the short-range drone 11 and adheres to the tracking mark 21 to the suspicious target C, the long-range drone 3 flies so as to track the suspicious target C. FIG. 15A is a diagram showing a flight example of the long-range drone 3 before the tracking mark 21 is fired. FIG. 15B is a diagram showing a flight example of the long-range drone 3 after the tracking mark 21 has adhered to the suspicious target C.

The camera that captures an image for detecting and tracking a suspicious target is not limited to a camera provided on the tracking robot 2 or the like. For example, when the suspicious target is indoors, the camera that captures an image for detecting and tracking the suspicious target may be a camera of another robot indoors or a surveillance camera provided indoors. For example, when the suspicious target is outdoors, the camera that captures an image for detecting and tracking the suspicious target may be an outdoor surveillance camera. That is, for example, the tracking robot 2 may detect a suspicious target and the like based on images captured by a camera of another robot indoors, an indoor surveillance camera, and an outdoor surveillance camera.

As described above, the tracking robot 2 according to the present embodiment includes the robot body 60, the detection unit 12, and the suspicious target detection unit 35. The detection unit 12 detects a surrounding condition indicating a situation around the robot body 60. The suspicious target detection unit 35 detects a suspicious target existing around the robot body 60 based on the surrounding condition detected by the detection unit 12. In this way, by using the surrounding condition detected by the detection unit 12 included in the tracking robot 2, a suspicious target can be detected with high accuracy.

The detection unit 12 detects a metal object existing around the robot body 60 as a surrounding condition. The suspicious target detection unit 35 detects the object detected by the detection unit 12 as a suspicious target. Thereby, a metal object (for example, a blade) existing around the robot body 60 can be detected with high accuracy as a suspicious target.

The detection unit 12 detects a shape of an object existing around the robot body 60 as a surrounding condition. When the shape of the object detected by the detection unit 12 is a suspicious target shape determined in advance, the suspicious target detection unit 35 detects the object as a suspicious target. Thereby, an object such as a weapon existing around the robot body 60 can be detected with high accuracy as a suspicious target.

The detection unit 12 detects an odor of an object existing around the robot body 60 as a surrounding condition. When the odor detected by the detection unit 12 is a suspicious target odor determined in advance, the suspicious target detection unit 35 detects the object as a suspicious target. Thereby, an object such as an illegal drug existing around the robot body 60 can be detected with high accuracy as a suspicious target.

The detection unit 12 detects identification information capable of identifying a person existing around the robot body 60 as a surrounding condition. Based on the identification information detected by the detection unit 12, when the person is a suspicious target person determined in advance, the suspicious target detection unit 35 detects the person as a suspicious target. Thereby, a person such as a wanted criminal or a suspicious person existing around the robot body 60 can be detected with high accuracy as a suspicious target.

The tracking robot 2 according to the present embodiment includes the notification unit 61 that gives notification that a suspicious target has been detected by the suspicious target detection unit 35. Thereby, it is possible to give notification to the surroundings that a suspicious target has been detected, and therefore, for example, a security guard or the like can take an appropriate response to the suspicious target.

The tracking robot 2 includes the short-range drone 11, the robot body 60, the detection unit 12, and the control unit 32. The short-range drone 11 tracks a suspicious target and is capable of firing the tracking mark 21 toward the suspicious target. The robot body 60 is capable of takeoff and landing of the short-range drone 11 and is capable of autonomous traveling. The detection unit 12 detects a situation around the robot body 60. The control unit 32 controls a drone and causes the robot body 60 to travel autonomously according to the situation detected by the detection unit 12. When a suspicious target is detected, the control unit 32 causes the short-range drone 11 to take off from the robot body 60 and fires the tracking mark 21 from the short-range drone 11 toward the suspicious target.

Thereby, the tracking robot 2 can track the suspicious target by tracking the tracking mark 21. Therefore, the tracking robot 2 can easily distinguish the suspicious target, tracking of the suspicious target becomes easy, and the suspicious target can be accurately distinguished. Accordingly, the tracking robot 2 can improve trackability of the suspicious target.

### (Fourth Embodiment)

A tracking system 1 according to a fourth embodiment will be described. Here, description will be given mainly of portions different from those of the above embodiments, and description of the same configurations and processing as those of the above embodiments will be omitted.

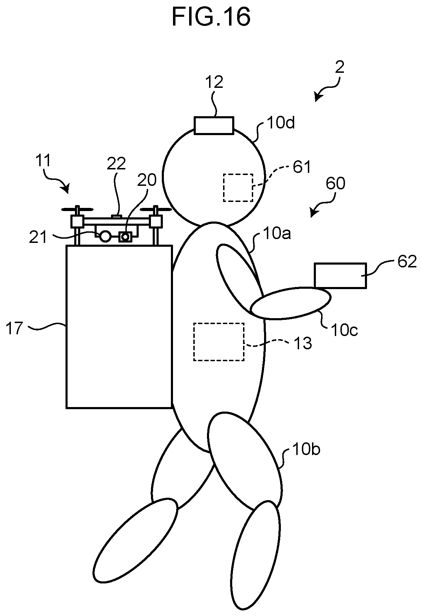

Next, the tracking robot 2 will be described with reference to FIG. 16. FIG. 16 is a diagram showing an outline of the tracking robot 2 according to the fourth embodiment.

The tracking robot 2 includes the robot body 60, the short-range drone 11, the detection unit 12, the control device 13, the notification unit 61, and the response unit 62.

The detection unit 12 includes a microphone. The detection unit 12 collects sound around the robot body 60 and detects it as a surrounding condition. Specifically, the detection unit 12 detects voice and sound volume around the robot body 60.

The detection unit 12 also includes an acceleration sensor. As the acceleration sensor, for example, a piezoelectric type, a piezoresistive type, or a capacitance type is used, but the acceleration sensor is not limited thereto. The detection unit 12 detects acceleration or vibration acting on the tracking robot 2. The detection unit 12 is not limited to an acceleration sensor, and may be another sensor capable of detecting acceleration or vibration, such as a vibration sensor.

The detection unit 12 outputs various types of surrounding conditions, acceleration, and the like detected as described above to the control device 13. The detection unit 12 may transmit the various types of detected surrounding conditions and the like to the management device 4 via the network N.

The detection unit 12 may be configured to include all of the above-described camera, microphone, and acceleration sensor, or may be configured to include some of them.

The notification unit 61 may give notification (warning) toward the suspicious target that a response operation by the response unit 62 described later will be performed on the suspicious target.

The response unit 62 is provided on the arm 10c of the robot body 60. More specifically, the response unit 62 is provided at a distal end of the arm 10c of the robot body 60 (a position corresponding to a hand). Although an example in which the response unit 62 is provided on the arm 10c is shown here, the response unit 62 is not limited thereto, and may be provided on another part of the robot body 60 such as the torso 10a, the legs 10b, or the head 10d.

When a suspicious target is detected around the robot body 60, the response unit 62 performs a response operation on the suspicious target. The response operation is an operation for repelling the suspicious target, an operation for intimidating the suspicious target, and the like.

Specifically, the response unit 62 performs electric discharge to the suspicious target as the response operation. More specifically, the response unit 62 is a so-called stun gun that discharges a high voltage to the suspicious target and temporarily disables behavior of the suspicious target.

The response unit 62 also performs light emission to the suspicious target as the response operation. More specifically, the response unit 62 is a so-called flashlight device that emits a flashlight (strong beam) to the suspicious target and temporarily disables vision of the suspicious target.

The response unit 62 may perform both electric discharge and light emission to the suspicious target as the response operation, or may perform one of electric discharge and light emission as the response operation.

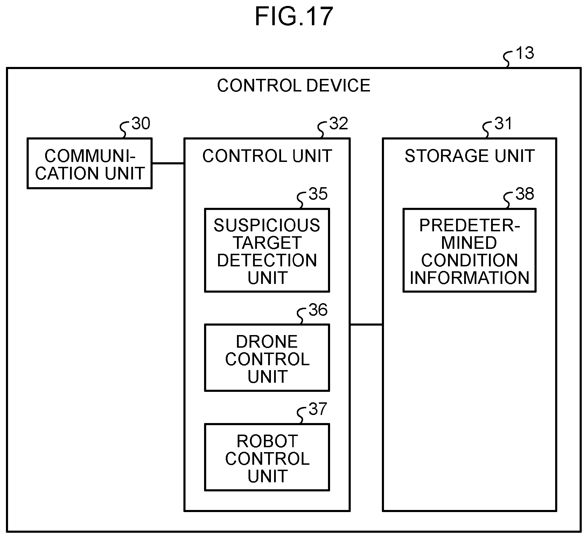

As shown in FIG. 17, the control device 13 includes the communication unit 30, the storage unit 31, and the control unit 32. FIG. 17 is a functional block diagram showing an outline of the control device 13 of the tracking robot 2 according to the fourth embodiment.

Predetermined condition information 38, various programs, various data, and the like are stored in the storage unit 31.

The predetermined condition information 38 is information relating to a condition under which execution of the response operation by the response unit 62 becomes possible. More specifically, as described above, the response operation by the response unit 62 is an operation for repelling or intimidating the suspicious target. Therefore, the response operation is an unnecessary (dangerous) operation during a normal time when a possibility that a suspicious target exists is relatively low. Accordingly, in the present embodiment, when a predetermined condition estimated to indicate that there is a possibility that a suspicious target exists is satisfied, execution of the response operation by the response unit 62 becomes possible.

The predetermined condition information 38 includes information indicating a condition under which it is estimated (sensed) that the surroundings of the robot body 60 or the robot body 60 itself are in a dangerous state due to the presence of a suspicious target. For example, when a suspicious target exists and a dangerous state occurs, people around the robot body 60 make noise, and therefore the predetermined condition information 38 includes information of a predetermined sound volume indicating a sound volume at which surrounding people are making noise. Thereby, when the sound volume around the robot body 60 is equal to or greater than the predetermined sound volume, it is determined that there is a possibility that surrounding people have made noise and a dangerous state has occurred due to the presence of a suspicious target, and it is determined that the predetermined condition is satisfied.

Further, when a suspicious target exists and a dangerous state occurs, people around the robot body 60 utter words indicating occurrence of danger, such as dangerous and help, and therefore the predetermined condition information 38 includes information of a predetermined keyword indicating occurrence of danger. Thereby, when the voice around the robot body 60 includes the predetermined keyword (dangerous, help, and the like), it is determined that there is a possibility that a dangerous state has occurred due to the presence of a suspicious target, and it is determined that the predetermined condition is satisfied.

Further, a suspicious target may hit or shake the robot body 60, and the robot body 60 itself may be in a dangerous state. Therefore, the predetermined condition information 38 includes information of a predetermined acceleration indicating that excessive force has acted due to the robot body 60 being hit or the like. Thereby, when acceleration acting on the robot body 60 is equal to or greater than the predetermined acceleration, it is determined that there is a possibility that excessive force has acted on the robot body 60 by the suspicious target and a dangerous state has occurred, and it is determined that the predetermined condition is satisfied.

The above-described predetermined condition information 38 is information determined in advance. The predetermined condition information 38 is stored in advance in the storage unit 31.

The suspicious target detection unit 35 determines whether the above-described predetermined condition has been satisfied prior to detection of a suspicious target. The suspicious target detection unit 35 determines whether the predetermined condition has been satisfied based on various types of information detected by the detection unit 12.

Specifically, the suspicious target detection unit 35 compares a sound volume around the robot body 60 detected by the detection unit 12 including the microphone with the predetermined sound volume of the predetermined condition information 38 stored in the storage unit 31. When the sound volume around the robot body 60 is equal to or greater than the predetermined sound volume, the suspicious target detection unit 35 determines that the predetermined condition has been satisfied.

The suspicious target detection unit 35 also analyzes voice around the robot body 60 detected by the detection unit 12 including the microphone by an arbitrary analysis method, and extracts words or sentences included in the voice. The suspicious target detection unit 35 compares the words or sentences extracted from the surrounding voice with the predetermined keyword of the predetermined condition information 38 stored in the storage unit 31. When the predetermined keyword is included in the words or sentences extracted from the voice around the robot body 60, the suspicious target detection unit 35 determines that the predetermined condition has been satisfied.

The suspicious target detection unit 35 also compares acceleration acting on the robot body 60 detected by the detection unit 12 including the acceleration sensor with the predetermined acceleration of the predetermined condition information 38 stored in the storage unit 31. When the acceleration acting on the robot body 60 is equal to or greater than the predetermined acceleration, the suspicious target detection unit 35 determines that the predetermined condition has been satisfied.

The suspicious target detection unit 35 may determine that the predetermined condition has been satisfied when some of the above-described sound volume, voice, and acceleration satisfy the respective conditions, or may determine that the predetermined condition has been satisfied when all of them satisfy the respective conditions. The suspicious target detection unit 35 may also determine that the predetermined condition has been satisfied when a suspicious target has been detected.

When the predetermined condition has been satisfied, the suspicious target detection unit 35 controls the response unit 62 so that execution of the response operation becomes possible. In other words, the suspicious target detection unit 35 permits execution of the response operation by the response unit 62. For example, the suspicious target detection unit 35 turns on power of the response unit 62.

When a suspicious target is detected as described above, the suspicious target detection unit 35 actuates the notification unit 61 and gives notification to the surroundings that the suspicious target has been detected. The suspicious target detection unit 35 also notifies the management device 4 via the network N that the suspicious target has been detected.

When a suspicious target is detected, the suspicious target detection unit 35 controls the response unit 62 and performs a response operation on the suspicious target. Specifically, the suspicious target detection unit 35 controls the response unit 62, which is a stun gun, discharges a high voltage to the suspicious target, and temporarily disables behavior of the suspicious target. The suspicious target detection unit 35 also controls the response unit 62, which is a flashlight device, emits a flashlight to the suspicious target, and temporarily disables vision of the suspicious target.

The suspicious target detection unit 35 may, before performing the response operation, give notification (warning) toward the suspicious target via the notification unit 61 that the response operation by the response unit 62 will be performed on the suspicious target.

In the present embodiment, after a suspicious target is detected, when the suspicious target runs away, tracking of the suspicious target is performed.

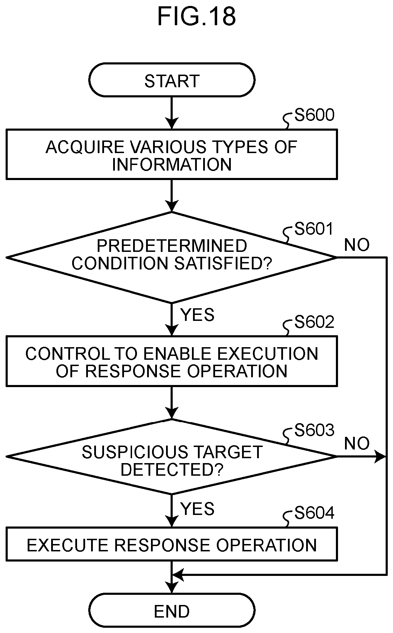

Next, a control process of the response unit 62 executed by the tracking robot 2 according to the fourth embodiment will be described with reference to FIG. 18. FIG. 18 is a flowchart for explaining the control process of the response unit 62 executed by the tracking robot 2 according to the fourth embodiment. At the start of the control process of the response unit 62, it is assumed that it is a normal time when a possibility that a suspicious target exists is relatively low, and the response unit 62 is in a state in which the response operation cannot be executed (that is, a state in which execution of the response operation is prohibited).

The control unit 32 acquires various types of information detected by the detection unit 12 (S600). Based on the acquired various types of information, the control unit 32 determines whether the predetermined condition has been satisfied (S601). When it is determined that the predetermined condition has not been satisfied (S601: No), the control unit 32 ends the present process. When it is determined that the predetermined condition has been satisfied (S601: Yes), the control unit 32 controls the response unit 62 so that execution of the response operation becomes possible (S602).

Next, based on the acquired various types of information, the control unit 32 determines whether a suspicious target has been detected (S603). For example, the control unit 32 detects a suspicious target by executing predetermined image processing on an image captured by a high-sensitivity camera.

When a suspicious target has not been detected (S603: No), the control unit 32 ends the present process. When a suspicious target has been detected (S603: Yes), the control unit 32 controls the response unit 62 and executes the response operation on the suspicious target (S604).

The control process of the short-range drone 11 according to the fourth embodiment is the same as the process of the short-range drone 11 according to the third embodiment. The control process of the long-range drone 3 according to the fourth embodiment is the same as the process of the long-range drone 3 according to the third embodiment.

As described above, the tracking robot 2 according to the present embodiment includes the robot body 60 and the response unit 62. When a suspicious target is detected around the robot body 60, the response unit 62 performs a response operation on the suspicious target. In this way, by the tracking robot 2 including the response unit 62, it becomes possible to perform, for example, an operation for repelling or an operation for intimidating the suspicious target, and an appropriate response can be made.

The response unit 62 performs electric discharge to the suspicious target as the response operation. Thereby, in the present embodiment, it becomes possible to perform a repelling operation or an intimidating operation by electric discharge on the suspicious target, and a more appropriate response can be made.

The response unit 62 performs light emission to the suspicious target as the response operation. Thereby, in the present embodiment, it becomes possible to perform a repelling operation or an intimidating operation by light emission on the suspicious target, and a more appropriate response can be made.

The tracking robot 2 includes the control unit 32. When a predetermined condition determined in advance has been satisfied, the control unit 32 controls the response unit 62 so that execution of the response operation becomes possible. Conversely, when the predetermined condition has not been satisfied, the control unit 32 controls the response unit 62 so that the response operation is not executed. Thereby, the predetermined condition can be, for example, a condition under which it is estimated that the surroundings of the robot body 60 or the robot body 60 itself are in a dangerous state due to the presence of a suspicious target. Therefore, when the predetermined condition is not satisfied, it is a normal time when a possibility that a suspicious target exists is relatively low, and it is possible to suppress the response unit 62 from operating erroneously during this normal time.

The tracking robot 2 includes the detection unit 12 that detects a sound volume around the robot body 60. When the sound volume detected by the detection unit 12 is equal to or greater than a predetermined sound volume determined in advance, the control unit 32 determines that the predetermined condition has been satisfied. By setting the predetermined condition in this way, it is possible to accurately determine, for example, that there is a possibility that surrounding people have made noise and a dangerous state has occurred due to the presence of a suspicious target, and at this time, it is possible to control the response unit 62 so that execution of the response operation becomes possible.

The tracking robot 2 includes the detection unit 12 that detects voice around the robot body 60. When the voice detected by the detection unit 12 includes a predetermined keyword determined in advance, the control unit 32 determines that the predetermined condition has been satisfied. By setting the predetermined condition in this way, it is possible to accurately determine, for example, that there is a possibility that the surroundings have become dangerous due to the presence of a suspicious target, and at this time, it is possible to control the response unit 62 so that execution of the response operation becomes possible.

The tracking robot 2 includes the detection unit 12 that detects acceleration acting on the robot body 60. When the acceleration detected by the detection unit 12 is equal to or greater than a predetermined acceleration determined in advance, the control unit 32 determines that the predetermined condition has been satisfied. By setting the predetermined condition in this way, it is possible to accurately determine, for example, that there is a possibility that excessive force has acted on the robot body 60 by a suspicious target and a dangerous state has occurred, and at this time, it is possible to control the response unit 62 so that execution of the response operation becomes possible.

The robot body 60 is a humanoid robot. The response unit 62 is provided on the arm 10c of the robot body 60. Thereby, in the present embodiment, it is possible to easily direct the response unit 62 in an appropriate direction, for example, by moving the response unit 62 so as to face the suspicious target.

The tracking robot 2 includes the short-range drone 11, the robot body 60, the detection unit 12, and the control unit 32. The short-range drone 11 tracks a suspicious target and is capable of firing the tracking mark 21 toward the suspicious target. The robot body 60 is capable of takeoff and landing of the short-range drone 11 and is capable of autonomous traveling. The detection unit 12 detects a situation around the robot body 60. The control unit 32 controls a drone and causes the robot body 60 to travel autonomously according to the situation detected by the detection unit 12. When a suspicious target is detected, the control unit 32 causes the short-range drone 11 to take off from the robot body 60 and fires the tracking mark 21 from the short-range drone 11 toward the suspicious target. [Translator's Note: The source text says "controls a drone," and does not specify the short-range drone 11 in this clause.]

Thereby, the tracking robot 2 can track the suspicious target by tracking the tracking mark 21. Therefore, the tracking robot 2 can easily distinguish the suspicious target, tracking of the suspicious target becomes easy, and the suspicious target can be accurately distinguished. Accordingly, the tracking robot 2 can improve trackability of the suspicious target.

### (Fifth Embodiment)

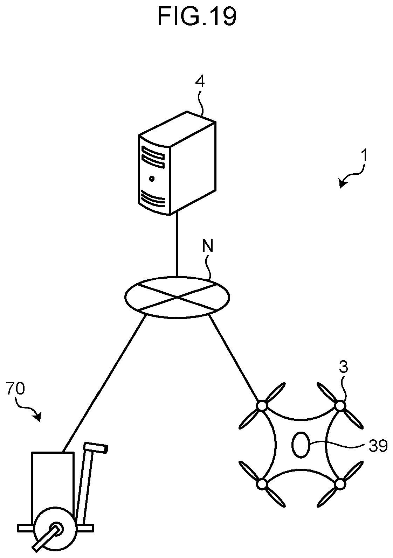

A tracking system 1 including a tracking robot 70 according to a fifth embodiment will be described with reference to FIG. 19. FIG. 19 is a diagram showing an outline of the tracking system 1 according to the fifth embodiment. Here, description will be given mainly of portions different from those of the above embodiments, and description of the same configurations and processing as those of the above embodiments will be omitted.

The tracking system 1 includes the tracking robot 70, the long-range drone 3, and the management device 4. The tracking robot 70 and the long-range drone 3, and the management device 4, are connected via the network N. A plurality of the tracking robots 70 and the long-range drones 3 are provided, for example.

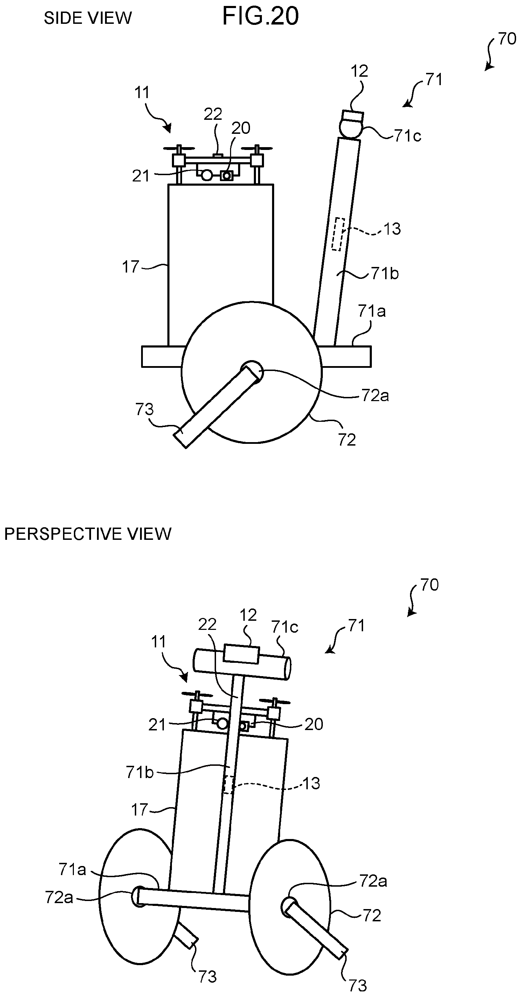

Next, the tracking robot 70 will be described with reference to FIG. 20. FIG. 20 is a diagram showing an outline of the tracking robot 70 according to the fifth embodiment.

The tracking robot 70 includes a robot body 71, the short-range drone 11, the detection unit 12, and the control device 13. The tracking robot 70 is capable of autonomous traveling, and tracks a suspicious target when the suspicious target is detected.

As the robot body 71, for example, something like a Segway (registered trademark) that performs two-wheel traveling is assumed. The robot body 71 is not limited to a Segway, and may be realized by, for example, a humanoid robot. The robot body 71 includes a bottom portion 71a, a torso 71b, and an upper end portion 71c.

The robot body 71 also includes two rollers 72. For example, one roller 72 is provided for each of left and right end portions of the bottom portion 71a.

The rollers 72 can rotate relative to the bottom portion 71a. For example, the rollers 72 rotate by transmission of rotation generated by a motor. The robot body 71 can travel by the rollers 72 rotating.

The rollers 72 may have a speed reduction mechanism such as a gear. The bottom portion 71a is also provided with a locking mechanism capable of locking so that the rollers 72 do not rotate. For example, the locking mechanism locks a rotation shaft of the rollers 72.

For example, the locking mechanism locks the rollers 72 so that the rollers 72 do not rotate relative to the bottom portion 71a by a claw portion engaging with a gear provided on the rotation shaft of the rollers 72. By release of the engagement between the gear and the claw portion, the rollers 72 can rotate relative to the bottom portion 71a. The above-described locking mechanism is one example, and is not limited thereto.

The robot body 71 also includes support portions 73 that support the robot body 71 together with the two rollers 72 on the ground. The support portions 73 are provided on the respective two rollers 72.

For example, the support portions 73 are provided on shaft portions 72a of the respective two rollers 72 so as to extend from the shaft portions 72a, which are rotation shafts of the respective two rollers 72, to the ground. The support portions 73 are inserted into the shaft portions 72a of the respective two rollers 72 from outside the shaft portions 72a of the respective two rollers 72. The support portions 73 support the robot body 71 at positions different from the two rollers 72. In FIG. 20, the robot body 71 is supported in a state in which the two rollers 72 and the support portions 73 extending obliquely from the shaft portions 72a to the ground are in contact with the ground at a total of four points.

The support portions 73 release contact with the ground by rotating about the shaft portions 72a, for example. By release of contact between the support portions 73 and the ground, the rollers 72 can rotate relative to the bottom portion 71a.

A base portion 17 on which the short-range drone 11 can take off and land is provided on a back surface of the torso 71b.

The detection unit 12 is provided, for example, on the upper end portion 71c of the robot body 71. The detection unit 12 may be provided on the bottom portion 71a, the torso 71b, or the like of the robot body 71. The detection unit 12 detects a situation around the robot body 71. The detection unit 12 may include a gyroscope. The gyroscope is provided, for example, on the torso 71b or the like of the robot body 71.

The detection unit 12 also includes a positioning device. The positioning device is, for example, GNSS. The positioning device detects the position of the robot body 71.

The robot control unit 37 causes the robot body 71 to travel autonomously by controlling driving of the rollers 72 of the robot body 71. The robot control unit 37 controls driving of the rollers 72 of the robot body 71 based on various types of information detected by the detection unit 12 so that, for example, the robot body 71 travels while avoiding an obstacle.

For example, the robot control unit 37 causes the robot body 71 to travel autonomously using a result obtained by inputting the situation detected by the detection unit 12 to a trained model that outputs motion information relating to movement of the respective rollers 72 according to input of the situation around the robot body 71.

The trained model is, for example, generative AI such as a text generation model such as chatGPT that performs automatic dialogue processing by characters. The motion information includes, for example, at least one of rotational speeds of the respective rollers 72.

Further, for example, when a suspicious target is detected, the robot control unit 37 sets a travel route so as to track the suspicious target. For example, the robot control unit 37 sets a travel route so as to track the suspicious target based on positional information of the robot body 71 and positional information at which the suspicious target has been detected. For example, the robot control unit 37 sets a travel route for tracking the suspicious target based on current positional information of the robot body 71, a direction in which the suspicious target has been detected with respect to the robot body 71, and a distance from the robot body 71 to the suspicious target.

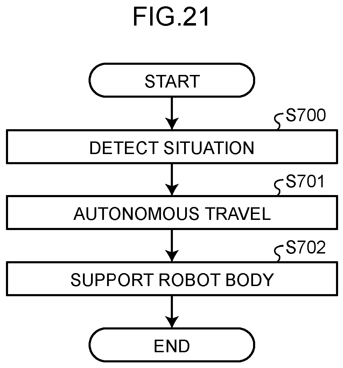

Next, a travel control process according to the fifth embodiment will be described with reference to FIG. 21. FIG. 21 is a flowchart for explaining the travel control process according to the fifth embodiment. The travel control process is executed by the control device 13 of the tracking robot 70.

The detection unit 12 detects a situation around the robot body 71 (S700). For example, the detection unit 12 detects various types of information from cameras, radars, microphones, and other sensors provided on the torso 71b, the upper end portion 71c, and the like of the robot body 71.

The control unit 32 causes the robot body 71 to travel autonomously according to the situation detected by the detection unit 12 (S701). For example, the control unit 32 causes the robot body 71 to travel autonomously using a result obtained by inputting the situation detected by the detection unit 12 to a trained model that outputs motion information relating to movement of the respective two rollers 72 according to input of the situation around the robot body 71.

The support portions 73 support the robot body 71 together with the two rollers 72 on the ground (S702). For example, the support portions 73 extending obliquely to the ground from the shaft portions 72a of the respective two rollers 72 support the robot body 71 at positions different from the two rollers 72.

The tracking robot 70 includes the robot body 71, the detection unit 12, and the control unit 32. The robot body 71 is capable of autonomous traveling. The detection unit 12 detects a situation around the robot body 71. The control unit 32 causes the robot body 71 to travel autonomously according to the situation detected by the detection unit 12. The robot body 71 includes the two rollers 72 and the support portions 73 that support the robot body 71 together with the two rollers 72 on the ground. The support portions 73 are provided on the respective two rollers 72.

The tracking robot 70 can track a suspicious target because it can travel autonomously while maintaining balance according to the situation detected from the detection unit 12 such as a gyroscope, without programming. Therefore, the tracking robot 70 can improve trackability of the suspicious target.

The tracking robot 70 can also maintain balance of the robot body 71 without consuming electric power even when the robot body 71 is in a stationary state. This point will be described in detail below.

For example, a robot that travels autonomously by two wheels such as a Segway usually falls forward or backward in a stationary state. Therefore, conventionally, such a robot stands by itself in a stationary state by the principle of a gyroscope based on the law of conservation of angular momentum that a constant angular momentum is maintained.

Conventionally, such a robot is also equipped with a sensor that senses movement of a center of gravity of a rider. Such a robot applies force in an appropriate direction based on information relating to movement of the center of gravity of the rider, and stands by itself while maintaining balance. That is, the robot automatically adjusts balance according to movement of the rider, and can remain standing without falling even in a stationary state. However, in this case, the robot needs to always perform motor control, and consumes electric power.

In contrast, the tracking robot 70 supports the robot body 71 together with the two rollers 72 on the ground by the support portions 73 provided on the respective two rollers 72. The tracking robot 70 can save electric power for motor control and calculation for balancing the robot body 71 by the support portions 73, and therefore can maintain the battery for a longer time accordingly. Thereby, the tracking robot 70 can maintain balance of the robot body 71 without consuming electric power.

The support portions 73 are also provided on the shaft portions 72a of the respective two rollers 72 so as to extend from the shaft portions 72a, which are rotation shafts of the respective two rollers 72, to the ground.

In this way, since the support portions 73 are provided on the shaft portions 72a, which are rotation shafts of the rollers 72, the tracking robot 70 can support the robot body 71 without hindering rotation of the rollers 72.

The support portions 73 are also inserted into the shaft portions 72a of the respective two rollers 72 from outside the shaft portions 72a of the respective two rollers 72.

Thereby, since it is possible to prevent erosion of space of the bottom portion 71a and the like of the robot body 71 due to the support portions 73 being provided on the rollers 72, the tracking robot 70 can place the short-range drone 11 and a rider on the robot body 71.

The support portions 73 also support the robot body 71 at positions different from the two rollers 72.

Thereby, for example, the robot body 71 can be supported in a state in which the two rollers 72 and the support portions 73 extending obliquely from the shaft portions 72a to the ground are in contact with the ground at a total of four points. Therefore, the tracking robot 70 can support the robot body 71 more stably.

The robot body 71 is, for example, a Segway.

Even in a Segway in which the robot body 71 easily falls forward or backward in a stationary state, the support portions 73 can support the robot body 71 together with the two rollers 72 on the ground. Therefore, the tracking robot 70 can maintain balance of the robot body 71 without consuming electric power.

Although the present invention has been described above using embodiments, the technical scope of the present invention is not limited to the scope described in the above embodiments. It is apparent to those skilled in the art that various modifications or improvements can be added to the above embodiments. It is apparent from the description of the claims that forms to which such modifications or improvements are added can also be included in the technical scope of the present invention.

For example, in the above embodiments, a tracking robot has been described as an example, but the use of the robot is not limited thereto, and other uses such as a worker replacement robot in a factory, a cargo transport robot in a warehouse, and the like are also assumed.

It should be noted that, regarding the order of execution of each process such as operations, procedures, steps, stages, and the like in the apparatus, system, program, and method shown in the claims, specification, and drawings, unless it is specifically stated as "before," "prior to," or the like, and unless an output of a previous process is used in a subsequent process, the processes can be realized in any order. Even if an operation flow in the claims, specification, and drawings is described using "first," "next," and the like for convenience, this does not mean that implementation in this order is essential.

### List of Reference Signs

1 Tracking system
2, 70 Tracking robot
3 Long-range drone
4 Management device
10, 50, 60, 71 Robot body
10a, 71b Torso
10b, 50b Leg
11 Short-range drone
12 Detection unit
13 Control device
14, 51a, 72 Roller
14a Central portion
15 Main motor
20 Camera
21 Tracking mark
32 Control unit
35 Suspicious target detection unit
36 Drone control unit
37 Robot control unit
51 Moving unit
52 Box portion
61 Notification unit
62 Response unit
71a Bottom portion
71c Upper end portion
73 Support portion

## Claims

1. A robot comprising:
a robot body capable of autonomous traveling;
a detection unit that detects a situation around the robot body; and
a control unit that causes the robot body to travel autonomously according to the situation detected by the detection unit, wherein
the robot body includes:
a torso;
two legs movably attached to the torso; and rollers that are provided one on each of the two legs and move the robot body, and
a central portion of each of the rollers is provided at a position substantially intermediate between a knee portion and the ground in each of the two legs.

2. The robot according to claim 1, wherein
the control unit causes the robot body to travel autonomously using a result obtained by inputting the situation detected by the detection unit to a trained model that outputs motion information relating to movement of each of the two legs according to input of the situation around the robot body.

3. The robot according to claim 2, wherein
the motion information includes at least one of thigh lifting and knee bending of each of the two legs, and rotational speeds of the respective rollers provided one on each of the two legs.

4. The robot according to claim 1, wherein
the robot body is provided with a drive mechanism for driving each of the rollers, and
a main motor of the drive mechanism is provided at a buttock portion in each of the two legs.

5. The robot according to any one of claims 1 to 4, wherein
the robot body is substantially life-size with a general adult male human.

6. A robot comprising:
a robot body capable of autonomous traveling;
a detection unit that detects a situation around the robot body; and
a control unit that causes the robot body to travel autonomously according to the situation detected by the detection unit, wherein
the robot body includes:
a torso;
one leg; and
a moving unit that moves the robot body, and
the robot further comprises:
at least a waist joint located at an upper end of the leg, an ankle joint located at a lower end of the leg, and a knee joint located between the waist and the ankle, wherein
the leg is movably attached to the torso at the waist and is movably attached to the moving unit at the ankle, and
the moving unit is provided with a roller.

7. A robot comprising:
a robot body;
a detection unit that detects a surrounding condition indicating a situation around the robot body; and
a suspicious target detection unit that detects a suspicious target existing around the robot body based on the surrounding condition detected by the detection unit.

8. A robot comprising:
a robot body; and
a response unit that performs a response operation on a suspicious target when the suspicious target is detected around the robot body.

9. A robot comprising:
a robot body capable of autonomous traveling;
a detection unit that detects a situation around the robot body; and
a control unit that causes the robot body to travel autonomously according to the situation detected by the detection unit, wherein
the robot body includes:
two rollers that move the robot body; and
support portions that support the robot body together with the two rollers on the ground, and
the support portions are provided on the respective two rollers.
